# EUROPEAN PATENT SPECIFICATION

(11) **EP 4 470 836 B1**
(45) Date of publication and mention of the grant of the patent: **15.10.2025**
(21) Application number: 23743360.2
(22) Date of filing: 22.01.2023
(51) Int. Cl.: B60Q 1/14, F21W 102/14, F21W 102/155, F21W 102/20

(54) **VEHICLE HEADLIGHT**
SCHEINWERFER FÜR FAHRZEUGE
PHARE DE VÉHICULE

(30) Priority: 24.01.2022 JP 2022008551; 30.08.2022 JP 2022137123
(43) Date of publication of application: 04.12.2024
(73) Proprietor: KOITO MANUFACTURING CO., LTD., Minato-ku Tokyo 108-8711 (JP)
(72) Inventor: MANO, Mitsuharu, Shizuoka-shi, Shizuoka 424-8764 (JP); WAKASUGI, Tomoki, Shizuoka-shi, Shizuoka 424-8764 (JP)
(74) Representative: Hoffmann Eitle
(86) International application number: PCT/JP2023/001811
(87) International publication number: WO 2023/140368

(56) References cited:
- EP-A1- 3 050 750
- WO-A1-2021/200701
- DE-A1- 102014 113 478
- JP-A- 2015 016 774
- JP-A- 2018 103 906
- JP-A- 2018 172 038
- JP-B2- 4 730 284
- US-A1- 2021 301 996

## Description

### Technical Field

The present invention relates to a vehicle headlight.

### Background Art

As a vehicle headlight typified by an automobile headlight, a vehicle headlight that changes a light distribution pattern of emitted light is known, and JP 2011-031807 A below discloses such a vehicle headlight.

The vehicle headlight described in JP 2011-031807 A below includes a lamp unit capable of changing a light distribution pattern of emitted light, and a control unit. The control unit controls the lamp unit based on information from a detection device that detects another vehicle located in front of a vehicle so that light is emitted to the surroundings of the other vehicle while suppressing emission of light to the other vehicle. Therefore, in the following JP 2011-031807 A, it is considered that it is possible to prevent glare from being given to a driver of another vehicle located in front of the vehicle by the vehicle headlight.

US 2021/301996 A1 refers to a headlight with a lamp unit including: light sources that emit laser light, and phase modulation elements that diffract the laser light emitted from the light sources with a phase modulation pattern that is changeable, and emit light of a light distribution pattern based on the phase modulation pattern. The lamp unit adjusts a total luminous flux amount of light emitted from the lamp unit according to the light distribution pattern.

Further documents are JP 2015 016774 A, JP4 730284 B2, DE 10 2014 113478 A1, JP 2018 172038 A, JP 2018 103906 A and EP 3 050 750 A1.

### Summary of Invention

A vehicle headlight according to a first aspect of the present invention includes: a lamp unit capable of changing a light distribution pattern of emitted light; a control unit that controls the lamp unit based on information input from a detection device that detects a predetermined object located in front of a vehicle, in which the control unit controls the lamp unit to emit light having a light distribution pattern including a predetermined light distribution pattern in a case where the predetermined object is not detected, and in a case where the predetermined object is detected, controls the lamp unit so that a light amount of a first region overlapping at least a part of the predetermined object in the predetermined light distribution pattern decreases and a light amount of a second region different from the first region increases at a predetermined magnification or by a predetermined amount as compared with the case where the predetermined object is not detected.

In the vehicle headlight of the first aspect, the light distribution pattern of the emitted light changes according to a situation in front of the vehicle, and the amount of light with which a predetermined object is irradiated is reduced. That is, the vehicle headlight of the first aspect controls the light distribution of the emitted light according to the situation in front of the vehicle. For example, when another vehicle located in front of the vehicle is detected as the object by the detection device, the amount of light emitted to the other vehicle is reduced. Therefore, according to the vehicle headlight of the first aspect, it is possible to prevent glare from being given to a driver of another vehicle. Furthermore, in a case where a retroreflective object such as a sign is detected as an object by the detection device, the amount of light irradiated to the retroreflective object is reduced. Therefore, according to the vehicle headlight, the amount of reflected light reflected by the retroreflective object and directed to the host vehicle is reduced, and glare to the driver of the host vehicle due to the reflected light can be suppressed. In addition, according to the vehicle headlight of the first aspect, it is possible to suppress a decrease in visibility in front of the vehicle as compared with a case where there is no second region. In addition, as described above, the light amount of the second region is increased at a predetermined magnification or increased by a predetermined amount. Therefore, according to the vehicle headlight of the first aspect, the light amount of the second region is increased while maintaining a relationship of intensity in a light intensity distribution of the second region. Therefore, according to the vehicle headlight of the first aspect, it is possible to suppress feeling of discomfort as compared with a case where the light amount of the second region is increased without maintaining the relationship of intensity in the light intensity distribution of the second region. When the light amount of the second region is increased at a predetermined magnification, a relationship between intensity in the light intensity distribution of the second region can be made clear as compared with a case where the light amount is increased by a predetermined amount, and a portion having a high light intensity can be made conspicuous.

Further, in the vehicle headlight according to the first aspect, the control unit may control the lamp unit so that the light amount decreasing in the first region and the light amount increasing in the second region become the same.

With such a configuration, an increase in energy consumption can be suppressed as compared with a case where the light amount increased in the second region is larger than the light amount decreased in the first region.

In the vehicle headlight of the first aspect, the control unit may control the lamp unit so that the light amount in the second region increases with lapse of time.

With such a configuration, it is possible to suppress feeling of discomfort about the change in the light amount as compared with the case where the light amount of the second region instantaneously increases.

Further, in the vehicle headlight according to the first aspect, in a case where a plurality of the predetermined objects to be detected are present, the control unit controls the lamp unit so that light amounts of a plurality of the first regions corresponding to the respective predetermined objects decrease and the second region includes at least a part of a region in a minimum rectangular frame surrounding the plurality of first regions.

The vicinity of the first region where the light amount is reduced tends to look dark. However, according to the vehicle headlight of the first aspect, it is possible to prevent the vicinity of the first region from appearing dark, and it is possible to further suppress deterioration in visibility.

In this case, the second region includes at least a part of a region between the adjacent first regions. In addition, the second region may include at least a part of a region between all of the sets of adjacent first regions when three or more of the predetermined objects are detected.

A region between adjacent first regions tends to look dark. However, with the above configuration, it is possible to suppress the dark appearance between the adjacent first regions.

In a case where there is a plurality of predetermined objects, the second region may include all other than the first region in the rectangular frame.

With such a configuration, it is possible to prevent the vicinity of the first region from appearing dark as compared with a case where the second region is a part of the rectangular frame.

In a case where there is a plurality of predetermined objects, the second region may include a region outside the rectangular frame.

With such a configuration, it is possible to suppress a decrease in visibility in the vicinity of the first region and other regions.

In a case where there is a plurality of predetermined objects, the second region may be the entire region between the adjacent first regions.

With such a configuration, it is possible to suppress that the space between the adjacent first regions looks dark as compared with a case where only a part of the region between the adjacent first regions is the second region.

According to the invention, the control unit controls the lamp unit so that a light amount of a third region different from the first region and the second region in the predetermined light distribution pattern increases and the second region becomes brighter than the third region as compared with a case where the predetermined object is not detected.

As described above, the region between the adjacent first regions tends to look dark. However, in this vehicle headlight of the first aspect, as described above, the third region to be increased in light is provided, and the second region is brighter than the third region. Therefore, according to the vehicle headlight of the first aspect, as compared with a case where there is no third region, it is possible to suppress a dark appearance between adjacent first regions while suppressing a decrease in visibility in front of the vehicle.

According to the invention, the third region surrounds the second region.

According to such a configuration, it is possible to suppress feeling of discomfort as compared with a case where the third region does not surround the second region.

### Brief Description of Drawings

FIG. 1 is a plan view conceptually illustrating a vehicle including a vehicle headlight according to a first embodiment as a first aspect of the present invention.
FIG. 2 is a cross-sectional view schematically illustrating a lamp portion of one vehicle headlight illustrated in FIG. 1.
FIG. 3 is a front view schematically illustrating a light source unit illustrated in FIG. 2.
FIG. 4 is a diagram for explaining a concept of a layer in an image generation unit of the first embodiment.
FIG. 5 is a diagram for explaining a low reduced light image and a high reduced light image.
FIG. 6 is a control flowchart of a control unit according to the first embodiment.
FIG. 7 is a diagram illustrating an example of a light distribution pattern of a low beam in the first embodiment.
FIG. 8 is a diagram illustrating an example of a light distribution pattern of a high beam in the first embodiment, similarly to FIG. 7.
FIG. 9 is a diagram schematically illustrating an example of an intermediate image to be generated.
FIG. 10 is a diagram illustrating an example of an ADB light distribution pattern in the first embodiment, similarly to FIG. 8.
FIG. 11 is a diagram illustrating an example of an ADB light distribution pattern in a second embodiment as a first aspect, similarly to FIG. 10. This embodiment does not form part of the present invention.
FIG. 12 is a diagram illustrating an example of an ADB light distribution pattern in a third embodiment as the first aspect, similarly to FIG. 10. This embodiment does not form part of the present invention.
FIG. 13 is a diagram illustrating an example of a light distribution pattern of a high beam according to a fourth embodiment as a second aspect, similarly to FIG. 7.
FIG. 14 is a diagram illustrating an example of an ADB light distribution pattern in a fourth embodiment, similarly to FIG. 7.
FIG. 15 is a graph illustrating an example of a temporal change in a light increase amount in a second region.
FIG. 16 is a graph illustrating a temporal change in a light increase amount of a second region in a modification, similarly to FIG. 15.
FIG. 17 is a diagram for explaining an example of a state in which the light amount of the second region increases in the modification.

### Description of Embodiments

Hereinafter, embodiments for implementing a vehicle headlight according to the present invention will be illustrated together with the accompanying drawings. The embodiments exemplified below are intended to facilitate understanding of the present invention and are not intended to limit the present invention. In the drawings referred to below, dimensions of each member may be changed for easy understanding.

### (First Embodiment)

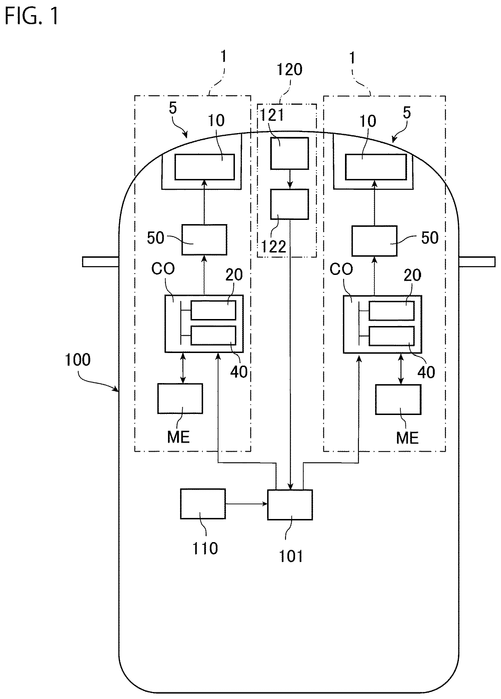

A first embodiment as a first aspect of the present invention will be described. FIG. 1 is a plan view conceptually illustrating a vehicle including a vehicle headlight in the present embodiment. As illustrated in FIG. 1, a vehicle 100 of the present embodiment is an automobile, and includes a pair of left and right vehicle headlights 1, a light switch 110, and a detection device 120 that detects a predetermined object located in front of the vehicle 100.

In the present embodiment, each vehicle headlight 1 mainly includes a lamp portion 5, a control unit CO, a memory ME, and a power supply circuit 50. In the present specification, unless otherwise specified, "right" means a right side from the viewpoint of a driver of the vehicle 100 that is a host vehicle, and "left" means a left side from the viewpoint of the driver of the vehicle 100 that is the host vehicle.

In the present embodiment, the configuration of one vehicle headlight 1 is the same as the configuration of the other vehicle headlight 1 except that the shape of the lamp portion 5 is substantially symmetrical. Therefore, one vehicle headlight 1 will be described below, and the description of the other vehicle headlight 1 will be omitted.

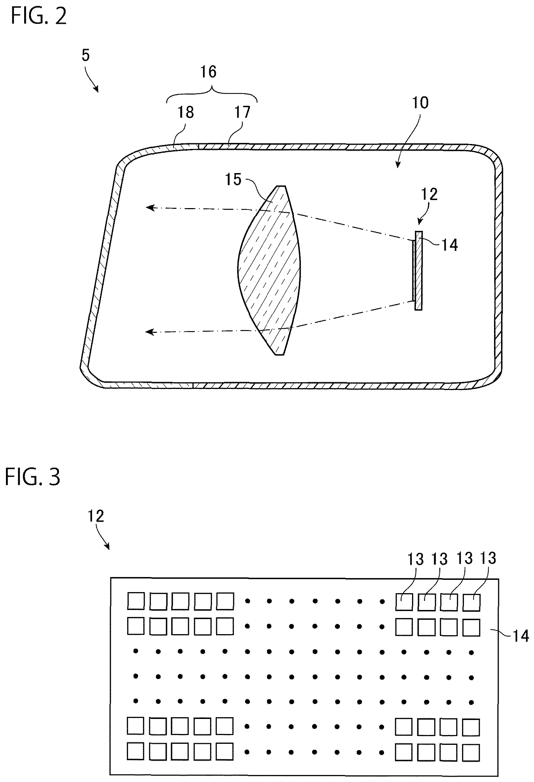

FIG. 2 is a cross-sectional view schematically illustrating a lamp portion 5 of one vehicle headlight 1 illustrated in FIG. 1. As illustrated in FIG. 2, the lamp portion 5 mainly includes a lamp unit 10 and a case 16.

The case 16 mainly includes a housing 17 and a front cover 18. The front cover 18 transmits light emitted from the lamp unit 10. The housing 17 is formed in a box shape having an opening on the front side, and the front cover 18 is fixed to the housing 17 to close the opening. In this way, an accommodation space surrounded by the housing 17 and the front cover 18 is formed in the case 16, and the lamp unit 10 is arranged in the accommodation space. The lamp unit 10 can change a light distribution pattern of emitted light, and mainly includes a light source unit 12 and a projection lens 15.

FIG. 3 is a front view schematically illustrating the light source unit 12 illustrated in FIG. 2. As illustrated in FIG. 3, the light source unit 12 of the present embodiment includes a plurality of light emitting elements 13 as light emitting units that emit light, and a circuit board 14 on which the plurality of light emitting elements 13 is mounted. The plurality of light emitting elements 13 are arranged in a matrix form to form rows in an up-down direction and a left-right direction, and emit light forward. These light emitting elements 13 can individually change the light amount emitted. In the present embodiment, the light emitting elements 13 are micro LEDs (Light Emitting Diodes), and the light source unit 12 is a so-called micro LED array. The number of the light emitting elements 13 arranged in the left-right direction and the number of the light emitting elements 13 arranged in the up-down direction are not particularly limited.

In the present embodiment, each light emitting element 13 corresponds to a pixel of an image generated by an image generation unit of the control unit CO described later. The light source unit 12 adjusts the amount of light emitted from each light emitting element 13 according to the data of the pixel corresponding to the light emitting element 13, thereby emitting light based on this image, and forms a light distribution pattern based on this image by the light. In the present embodiment, the light emitting element 13 and the pixel correspond to each other on a one-to-one basis, but are not particularly limited.

The projection lens 15 is disposed in front of the light source unit 12, light emitted from the light source unit 12 is incident on the projection lens, and a divergence angle of the light is adjusted by the projection lens 15. Therefore, light whose divergence angle is adjusted by the projection lens 15 is emitted from the lamp unit 10, and the light is emitted from the lamp portion 5 to the front of the vehicle 100 via the front cover 18. The projection lens 15 of the present embodiment is a lens in which the light incident surface and the light emitting surface are formed in a convex shape, and the rear focal point of the projection lens 15 is located on or near the light emitting surface of any one of the light emitting elements 13 in the light source unit 12. Therefore, the light distribution pattern of the light irradiated to the front of the vehicle 100 is a light distribution pattern in which the light distribution pattern of the light emitted from the light source unit 12 is vertically and horizontally inverted, and the image representing this light distribution pattern is an image in which the image representing the light distribution pattern of the light emitted from the light source unit 12 is vertically and horizontally inverted.

Next, the control unit CO illustrated in FIG. 1 includes, for example, an integrated circuit such as a microcontroller, an integrated circuit (IC), a large-scale integrated circuit (LSI), or an application specific integrated circuit (ASIC), or a numerical control (NC) device. In addition, when the NC device is used, the control unit CO may use a machine learning device or may not use a machine learning device.

The memory ME is configured to store information and read the stored information. The memory ME is, for example, a non-transitory recording medium, and is preferably a semiconductor recording medium such as a random access memory (RAM) or a read only memory (ROM), but may include a recording medium of any format such as an optical recording medium or a magnetic recording medium. Note that the "non-transitory" recording medium includes all computer-readable recording media except for a transitory propagating signal (transitory, propagating signal), and does not exclude a volatile recording medium. Various programs for controlling the lamp unit 10 and information necessary for the control are stored in the memory ME, and the control unit CO reads the programs and information stored in the memory ME.

The control unit CO of the present embodiment includes an image generation unit 20 and a light distribution control unit 40 in a state where various programs are read from the memory ME. The image generation unit 20 generates an image based on a plurality of images stored in the memory ME. In the present embodiment, these images are grayscale images in which data of each pixel in each image is a gray value, and a pixel having a larger gray value is brighter. However, the data of each pixel is not particularly limited. Furthermore, the information of these images may be read from a memory outside the vehicle via a wireless communication device provided in the vehicle 100.

In the present embodiment, the plurality of images stored in the memory ME are a low beam image, an additional light distribution image, and a plurality of reduced light images. The low beam image is an image in which light emitted from the light source unit 12 forms a light distribution pattern of a low beam. The additional light distribution image is an image in which light emitted from the light source unit 12 forms the additional light distribution pattern as a predetermined light distribution pattern. This additional light distribution pattern is a light distribution pattern in which a light distribution pattern of a high beam is formed by being added to a light distribution pattern of a low beam. Therefore, the light distribution pattern of the high beam is a light distribution pattern including an additional light distribution pattern as a predetermined light distribution pattern. The reduced light image is an image superimposed on a part of the additional light distribution image, and in the present embodiment, at least a part of the reduced light image does not overlap the low beam image. The image generation unit 20 of the present embodiment generates an image by combining these images stored in the memory ME using the layer function based on information from the light switch 110 and the detection device 120 to be described later.

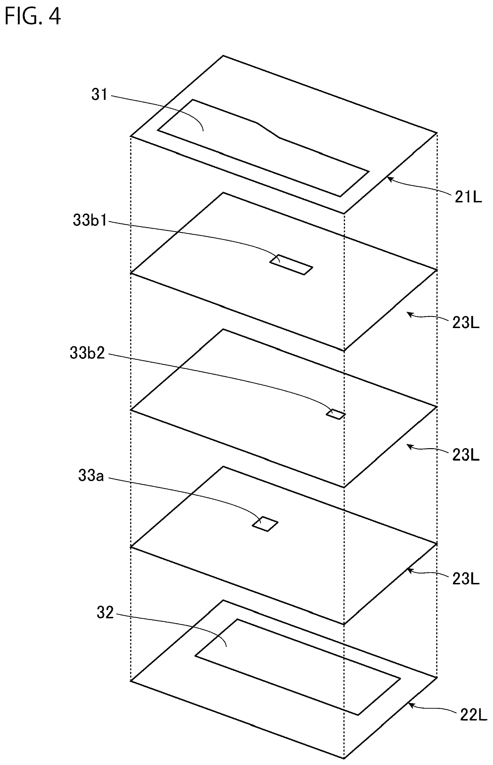

FIG. 4 is a diagram for describing a concept of a layer in the image generation unit 20 of the present embodiment. As illustrated in FIG. 4, the image generation unit 20 of the present embodiment includes a low beam layer 21L, an additional light distribution layer 22L, and a plurality of reduced light image layers 23L. Priority is set to each layer, and in FIG. 4, a layer with a lower priority is illustrated in the lower side. The priority indicates the order of superimposition, and a layer having a higher priority is superimposed on a layer having a lower priority. In the present embodiment, the priority of the layers 21L, 22L, and 23L increases in the order of the additional light distribution layer 22L, the reduced light image layer 23L, and the low beam layer 21L. However, the priorities of these layers 21L, 22L, and 23L are not particularly limited, and may be changeable. Further, a changeable opacity is set to each layer. When opacity is 100%, the image arranged in the layer is completely opaque. As the opacity decreases, transparency of the image arranged in the layer increases. When the opacity is 0%, the image arranged in the layer is completely transparent, and the image does not exist.

The image generation unit 20 reads the low beam image 31 from the memory ME and arranges the low beam image in the low beam layer 21L. The low beam image 31 of the present embodiment is an image of a light distribution pattern of a low beam having an elbow point. As described above, the image representing the light distribution pattern of the light emitted to the front of the vehicle 100 is an image obtained by vertically and horizontally inverting the image representing the light distribution pattern of the light emitted from the light source unit 12. In the present embodiment, an upper right pixel in the image illustrated in FIG. 4 corresponds to the lower right light emitting element 13 illustrated in FIG. 3, a lower left pixel in the image illustrated in FIG. 4 corresponds to the upper left light emitting element 13 illustrated in FIG. 3, and the correspondence relationship is vertically inverted. Therefore, the light distribution pattern of the light irradiated to the front of the vehicle 100 is a light distribution pattern corresponding to the image illustrated in FIG. 4. Furthermore, the pixels of the images in the following drawings correspond to the light emitting elements 13, similarly to the image illustrated in FIG. 4.

In addition, the image generation unit 20 reads the additional light distribution image 32 from the memory ME and arranges the additional light distribution image in the additional light distribution layer 22L.

In addition, the image generation unit 20 reads a plurality of reduced light images from the memory ME and arranges the reduced light images one by one in the reduced light image layers 23L different from each other. In the present embodiment, the plurality of reduced light images includes a plurality of low reduced light images 33a including a first image element fe and a plurality of high reduced light images 33b1 and 33b2 including a second image element se darker than the first image element fe. Note that FIG. 4 illustrates three layers 23L in which one low reduced light image 33a and two high reduced light images 33b1 and 33b2 are arranged, and illustration of the other layers 23L is omitted. In the present embodiment, the priority of the layer 23L in which the low reduced light image 33a is arranged is lower than the priority of the layer 23L in which the high reduced light images 33b1 and 33b2 are arranged, but is not particularly limited, and may be changeable.

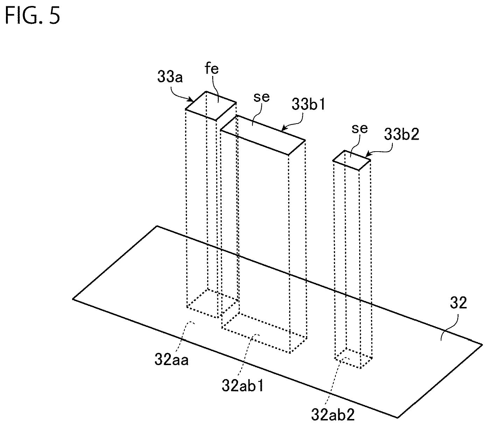

FIG. 5 is a diagram for explaining the low reduced light image 33a and the high reduced light images 33b1 and 33b2, and illustrates an example of a state in which these images 33a, 33b1, and 33b2 are superimposed on a part of the additional light distribution image 32. As illustrated in FIG. 5, these images 33a, 33b1, and 33b2 overlap the regions 32aa, 32ab1, and 32ab2 in the additional light distribution image 32. The low reduced light image 33a is darker than the brightness of region 32aa in additional light distribution image 32. Although not illustrated, at least a part of the region 32aa overlapping the additional light distribution image 32 in each of the plurality of low reduced light images 33a is different from each other. Furthermore, the first image elements fe constituting the respective low reduced light images 33a are formed as rectangles having the same predetermined brightness, and have different positions, areas, aspect ratios, and the like. However, the brightness in the first image element fe may not be constant, and the shape of the first image element fe is not particularly limited. Furthermore, the low reduced light image 33a may include a plurality of first image elements fe separated from each other.

The high reduced light images 33b1 and 33b2 are darker than the brightness of the regions 32ab1 and 32ab2 in the additional light distribution image 32 and the brightness of the low reduced light image 33a. Although not illustrated, at least a part of the regions 32ab1 and 32ab2 overlapping the additional light distribution image 32 in each of the plurality of high reduced light images 33b1 and 33b2 is different from each other. Furthermore, the second image elements se constituting the respective high reduced light images 33b1 and 33b2 are formed as rectangles having the same predetermined value in brightness, and have different positions, areas, aspect ratios, and the like. However, the brightness in the second image element se may not be constant, and the shape of the second image element se is not particularly limited. Furthermore, the high reduced light images 33b1 and 33b2 may include a plurality of second image elements se separated from each other. The brightness of the second image element se may be zero.

Next, the light distribution control unit 40 in the control unit CO illustrated in FIG. 1 controls the lamp unit 10 by controlling the power supply circuit 50 based on the information of the image generated by the image generation unit 20. As described above, the image generation unit 20 generates an image based on information from the light switch 110 and the detection device 120. Therefore, it can be understood that the control unit CO controls the lamp unit 10 based on the information from the light switch 110 and the detection device 120 by the image generation unit 20 and the light distribution control unit 40.

The power supply circuit 50 includes a driver, and when a control signal is input from the light distribution control unit 40, power supplied from a power supply (not illustrated) to each light emitting element 13 of the light source unit 12 is adjusted by the driver. In this way, the amount of light emitted from each light emitting element 13 is adjusted, the light source unit 12 emits light based on the image generated by the image generation unit 20, and light having a light distribution pattern corresponding to the image is emitted from the lamp unit 10. Note that the light emitting element 13 corresponding to a pixel having a larger gray value is supplied with more power, and in the present embodiment, when the gray value exceeds a threshold value, power corresponding to the threshold value is supplied to the light emitting element 13. Furthermore, in the present embodiment, the driver of the power supply circuit 50 adjusts the power supplied to each light emitting element 13 by pulse width modulation (PWM) control, thereby adjusting the amount of light emitted from each light emitting element 13. However, a method of adjusting the amount of light emitted from each light emitting element 13 is not particularly limited.

The light switch 110 of the present embodiment is a switch that selects one of emission of a low beam, emission of a high beam, and non-emission of light. When the emission of the low beam or the emission of the high beam is selected, the light switch 110 outputs a signal indicating the selected state to the control unit CO via an electronic control unit (ECU) 101 of the vehicle 100. In addition, the light switch 110 does not output a signal when non-emission of light is selected.

The detection device 120 of the present embodiment detects a predetermined object located in front of the vehicle 100. Examples of the predetermined object include other vehicles such as a preceding vehicle and an oncoming vehicle, a retroreflective object, a human such as a pedestrian, an obstacle, and the like. The retroreflective object of the present embodiment is an object that does not emit light by itself and retroreflects emitted light at a predetermined spreading angle, and examples of such a retroreflective object include a road sign, a visual guide, and the like. The detection device 120 of the present embodiment includes an image acquisition unit 121 and a detection unit 122.

The image acquisition unit 121 acquires an image in front of the vehicle 100, and the image acquired by the image acquisition unit 121 includes at least a part of a region that can be irradiated with light emitted from the pair of vehicle headlights 1. Examples of the image acquisition unit 121 include a charged coupled device (CCD) camera, a complementary metal oxide semiconductor (CMOS) camera, a light detection and ranging (LiDAR), a millimeter wave radar, and the like. The image acquisition unit 121 outputs a signal related to the acquired image to the detection unit 122.

The detection unit 122 has, for example, a configuration similar to that of the control unit CO. The detection unit 122 performs predetermined image processing on the image acquired by the image acquisition unit 121, and detects the presence of a predetermined object, the presence position of the predetermined object in the image, the type of the predetermined object, and the like from the image subjected to the image processing. When detecting a predetermined object located in front of the vehicle 100, the detection device 120 outputs a signal indicating information such as the presence of the predetermined object, the presence position of the predetermined object in the image, and the type of the predetermined object to the control unit CO via the ECU101. When not detecting the predetermined object located in front of the vehicle 100, the detection device 120 outputs a signal indicating that the predetermined object does not exist to the control unit CO via the ECU101, but may not output the signal.

Note that the predetermined objects detected by the detection device 120, the number of types of the predetermined objects, and the configuration of the detection device 120 are not particularly limited. For example, the image acquisition unit 121 may be a CCD camera or a LiDAR, and in this case, the detection unit 122 detects a predetermined object based on images acquired by the CCD camera and the LiDAR. In addition, a method of detecting a predetermined object by the detection unit 122 is not limited. For example, in a case where information of an image in which a pair of white light spots and a pair of red light spots having luminance higher than predetermined luminance exist at a predetermined interval in the left-right direction is input from the image acquisition unit 121, the detection unit 122 detects the presence and the presence position of another vehicle as a predetermined object from the light spots. For example, when information of an image in which a pair of white light spots is present is input from the image acquisition unit 121, the detection unit 122 identifies another vehicle as an oncoming vehicle. In addition, when the information of the image in which the pair of red light spots is present is input from the image acquisition unit 121, the detection unit 122 identifies another vehicle as a preceding vehicle. For example, a pair of white light spots is a headlight of an oncoming vehicle, and a pair of red light spots is a tail light of a preceding vehicle.

In such a detection device 120, instead of the headlight of the oncoming vehicle, for example, white light is emitted toward the vehicle 100 from a pair of flashlights arranged at a predetermined interval in the left-right direction in front of the vehicle 100 toward the vehicle 100, whereby an experiment of a situation where the oncoming vehicle is located in front of the vehicle 100 can be realized. In addition, in a case where the flashlight emits red light, an experiment of a situation where the preceding vehicle is located in front of the vehicle 100 can be realized.

Next, the operation of the vehicle headlight 1 of the present embodiment will be described. In the present embodiment, the operations of the pair of vehicle headlights 1 are the same and synchronized with each other. Therefore, hereinafter, the operation of one vehicle headlight 1 will be described, and the description of the operation of the other vehicle headlight 1 will be omitted.

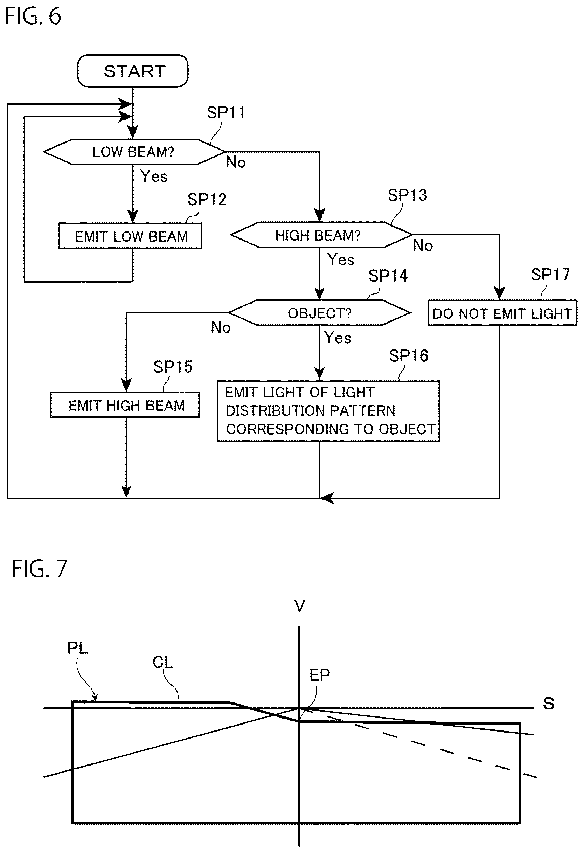

FIG. 6 is a control flowchart of the control unit CO in the present embodiment. As illustrated in FIG. 6, the control flow includes Steps SP11 to SP17.

### (Step SP11)

This step is a step in which the control unit CO changes the step to proceed next depending on the case according to the signal input from the light switch 110. In this step, the control unit CO advances the control flow to Step SP12 in a case where a signal indicating emission of a low beam is input from the light switch 110, and advances the control flow to Step SP13 in a case where this signal is not input.

### (Step SP12)

This step is a step in which the control unit CO controls the lamp unit 10 so that a low beam is emitted from the vehicle headlight 1. In the present embodiment, first, the image generation unit 20 generates the low beam image 31 by setting the opacity of the low beam layer 21L to 100% and setting the opacity of all the other layers to 0%. Next, the light distribution control unit 40 controls the power supply circuit 50 based on the generated information of the low beam image 31 to supply power to each light emitting element 13 of the light source unit 12. By the supply of this power, the light source unit 12 emits light based on the low beam image 31, and light having a light distribution pattern of the low beam is emitted from the vehicle headlight 1. Then, the control unit CO returns the control flow to Step SP11.

FIG. 7 is a diagram illustrating an example of a light distribution pattern of a low beam in the present embodiment. In FIG. 7, S indicates a horizontal line, V indicates a vertical line passing through the center of the vehicle 100 in the left-right direction, and a light distribution pattern PL of a low beam formed on a virtual vertical screen arranged 25 m ahead of the vehicle 100 is indicated by a thick line. A cutoff line CL in the light distribution pattern PL of the low beam of the present embodiment has an elbow point EP located below the horizontal line S and on or near the vertical line V, and a step is formed.

### (Step SP13)

This step is a step in which the control unit CO changes the step to proceed next depending on the case according to the signal input from the light switch 110. In this step, the control unit CO advances the control flow to Step SP14 in a case where a signal indicating emission of a high beam is input from the light switch 110, and advances the control flow to Step SP17 in a case where this signal is not input.

### (Step SP14)

This step is a step in which the control unit CO changes the step to proceed next depending on the case according to the signal input from the detection device 120. In this step, the control unit CO advances the control flow to Step SP15 when a signal indicating that the predetermined object does not exist is input from the detection device 120, and advances the control flow to Step SP16 when a signal indicating information on the predetermined object is input from the detection device 120.

### (Step SP15)

This step is a step in which the control unit CO controls the lamp unit 10 so that a high beam is emitted from the vehicle headlight 1. In the present embodiment, first, the image generation unit 20 generates a high beam image representing a light distribution pattern of a high beam. Specifically, the image generation unit 20 generates a high beam image by superimposing the low beam image 31 on a part of the additional light distribution image 32 and synthesizing the same while setting the opacity of the low beam layer 21L and the additional light distribution layer 22L to 100% and setting the opacity of all the other layers to 0%. Next, the light distribution control unit 40 controls the power supply circuit 50 based on the information of the generated high beam image to supply power to each light emitting element 13 of the light source unit 12. By the supply of this power, the light source unit 12 emits light based on a high beam image, and light having a high beam light distribution pattern is emitted from the vehicle headlight 1. Then, the control unit CO returns the control flow to Step SP11.

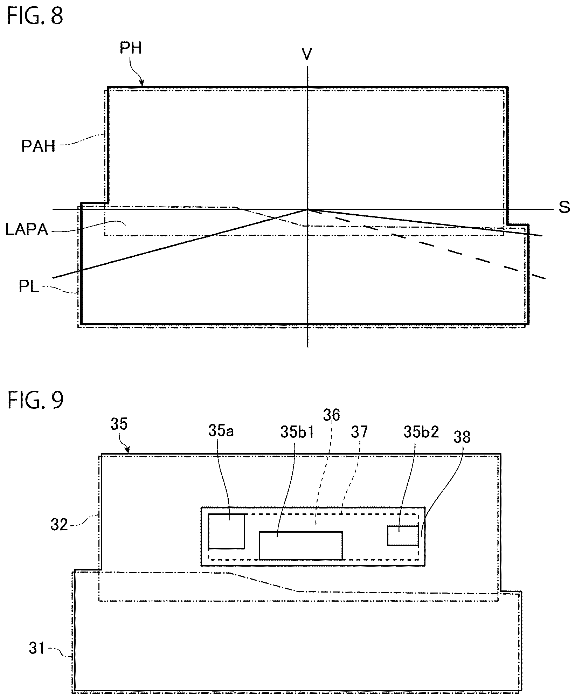

FIG. 8 is a diagram illustrating an example of the light distribution pattern of the high beam in the present embodiment, similarly to FIG. 7. As described above, the light distribution pattern PH of the high beam illustrated in FIG. 7 is formed by the light based on the high beam image in which the low beam image 31 is superimposed on a part of the additional light distribution image 32. Therefore, the light distribution pattern PH of the high beam is formed by superimposing the light distribution pattern PL of the low beam and the additional light distribution pattern PAH, and can be understood as a light distribution pattern including the additional light distribution pattern PAH. In FIG. 8, the light distribution pattern PL of the low beam is indicated by a one-dot chain line, and the additional light distribution pattern PAH is indicated by a two-dot chain line. In addition, the additional light distribution pattern PAH and the light distribution pattern PL of the low beam are slightly shifted vertically and horizontally. The light distribution pattern of the region LAPA in which the light distribution pattern PL of the low beam and the additional light distribution pattern PAH overlap in the light distribution pattern PH of the high beam is the light distribution pattern of the region LAPA in the light distribution pattern PL of the low beam. Therefore, in the present example, the light distribution pattern of the region not overlapping the light distribution pattern PL of the low beam in the additional light distribution pattern PAH is added to the light distribution pattern PL of the low beam, thereby forming the light distribution pattern PH of the high beam.

### (Step SP16)

This step is a step in which the control unit CO controls the lamp unit 10 so that the light distribution pattern of the light emitted from the vehicle headlight 1 becomes the ADB light distribution pattern corresponding to the predetermined object detected by the detection device 120. The ADB light distribution pattern in the present embodiment is a light distribution pattern in which light amounts in a first region overlapping at least a part of a predetermined object, a second region different from the first region, and a third region different from the first region and the second region are changed among the additional light distribution patterns PAH in the high beam light distribution pattern PH. The change in the light amount of the first region is a change that decreases as compared with a case where the predetermined object is not detected. The change in the light amount of the second region is a change that increases at a predetermined magnification as compared with a case where the predetermined object is not detected, and the change in the light amount of the third region is a change that increases as compared with a case where the predetermined object is not detected. The second region is brighter than the third region. That is, the control unit CO controls the lamp unit 10 so that the light amount of the first region decreases, the light amount of the second region increases at a predetermined magnification, and the light amount of the third region increases in the additional light distribution pattern PAH in the high beam light distribution pattern PH as compared with the case where the predetermined object is not detected. When a plurality of predetermined objects are detected, the first region is provided for each predetermined object. Therefore, the control unit CO controls the lamp unit 10 so that the light amounts of the plurality of first regions corresponding to the respective predetermined objects decrease.

In such control, in the present embodiment, first, the image generation unit 20 generates the ADB light distribution image representing an ADB light distribution pattern based on information on a predetermined object input from the detection device 120. Specifically, the image generation unit 20 selects at least one reduced light image from the plurality of reduced light images based on the information from the detection device 120. Then, the image generation unit 20 generates the intermediate image by combining the low beam image 31, the additional light distribution image 32, and the selected reduced light image while setting the opacity of the low beam layer 21L, the additional light distribution layer 22L, and the reduced light image layer 23L in which the selected reduced light image is arranged to 100% and setting the opacity of all the other layers to 0%. In this way, the low beam image 31 is further superimposed on a part of the image generated by superimposing the selected reduced light image on a part of the additional light distribution image 32. Then, this intermediate image is an image in which a part of a portion based on the additional light distribution image 32 in the above-described high beam image is darkened.

FIG. 9 is a diagram schematically illustrating an example of an intermediate image to be generated, and is a diagram illustrating an intermediate image 35 to be generated when one low reduced light image 33a and two high reduced light images 33b1 and 33b2 are selected as reduced light images. Note that, in FIG. 9, the low beam image 31 is indicated by a one-dot chain line, the additional light distribution image 32 is indicated by a two-dot chain line, and these images 31 and 32 are slightly shifted vertically and horizontally. A portion 35a in the intermediate image 35 illustrated in FIG. 9 is a portion on which the low reduced light image 33a is superimposed, a portion 35b1 is a portion on which the high reduced light image 33b1 is superimposed, and a portion 35b2 is a portion on which the high reduced light image 33b2 is superimposed. Therefore, the brightness of these portions 35a, 35b1, and 35b2 is darker than the portions overlapping these portions 35a, 35b1, and 35b2 in the additional light distribution image 32, and the portions 35b1 and 35b2 are darker than the portion 35a. The image generation unit 20 increases the brightness of a portion 36, which is at least a portion other than a portion on which the selected reduced light image is superimposed, among portions based on the additional light distribution image 32 in the intermediate image 35 at a predetermined magnification. In the present embodiment, as illustrated in FIG. 9, when there are a plurality of portions 35a, 35b1, and 35b2 on which the reduced light images are superimposed, the entire region other than these portions 35a, 35b1, and 35b2 in the smallest rectangular frame 37 surrounding these portions 35a, 35b1, and 35b2 is the above-described portion 36. That is, the image generation unit 20 increases the gray value of the pixel in the portion 36 of the intermediate image 35 at a predetermined magnification. In FIG. 9, the rectangular frame 37 is indicated by a broken line.

In addition, the image generation unit 20 surrounds the portion 36 in which the brightness is increased in this way, and increases the brightness of the portion 38 in contact with the entire circumference of the portion 36. Note that the brightness of the portion 36 is brighter than the brightness of the portion 38. That is, the image generation unit 20 increases the brightness of the portion 36 and the portion 38 in this manner. In the present embodiment, the brightness of the portion 38 is increased at a specific magnification. This specific magnification may be the same as or different from a predetermined magnification for the portion 36.

Furthermore, although not illustrated, in a case where the portion 36 overlaps a portion including the low beam image 31, the image generation unit 20 does not increase the brightness of a portion overlapping a portion including the low beam image 31 in the portion 36. Furthermore, in a case where the portion 38 described above overlaps the portion including the low beam image 31, the image generation unit 20 does not increase the brightness of the portion overlapping the portion including the low beam image 31 in the portion 38. Furthermore, in a case where there is one portion on which the reduced light image is superimposed, the image generation unit 20 sets a portion that surrounds the portion on which the reduced light image is superimposed and is in contact with the entire circumference of the portion as the above-described portion 36.

The image in which the brightness of a part of the intermediate image 35 is increased in this manner is an image in which a part of the portion of the high beam image based on the additional light distribution image 32 is darkened, another portion of the portion are brightened at a predetermined magnification, and still other portion is increased at a specific magnification. Therefore, this image is an image representing a light distribution pattern in which the light amount of the first region is decreased, the light amount of the second region different from the first region is increased at a predetermined magnification, and the light amount of the third region different from the second region and the second region is increased at a specific magnification of the additional light distribution patterns PAH in the high beam light distribution pattern PH. Then, the image generation unit 20 selects at least one reduced light image so that the first region overlaps at least a part of the predetermined object. Therefore, the image generated by the image generation unit 20 is an ADB light distribution image representing the ADB light distribution pattern. Note that, in the present embodiment, the low reduced light image 33a is selected for the retroreflective object that is a predetermined object, and the high reduced light images 33b1 and 33b2 are selected for a human that is a predetermined object or another vehicle.

Next, the light distribution control unit 40 controls the power supply circuit 50 based on the information of the generated ADB light distribution image, and causes the light source unit 12 to emit light based on the ADB light distribution image. Therefore, light having an ADB light distribution pattern corresponding to a predetermined object is emitted from the vehicle headlight 1. Then, the control unit CO returns the control flow to Step SP11.

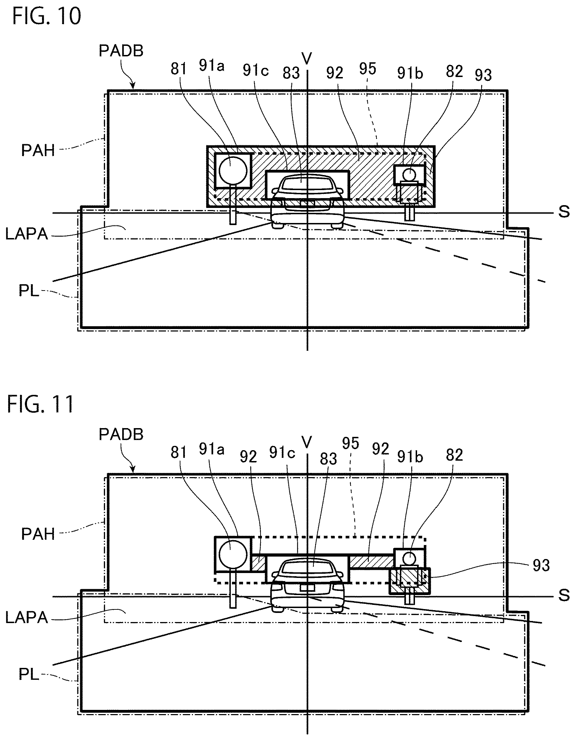

FIG. 10 is a diagram illustrating an example of the ADB light distribution pattern in the present embodiment, similarly to FIG. 8, and is a diagram illustrating the ADB light distribution pattern when the retroreflective object 81, the human 82, and the other vehicle 83 are detected by the detection device 120. In FIG. 10, the retroreflective object 81 is a road sign, the human 82 is a pedestrian, and the other vehicle 83 is a preceding vehicle. In the ADB light distribution pattern PADB, the light amount of the first region 91a overlapping the retroreflective object 81 is smaller than the light amount of the first region 91a in the additional light distribution pattern PAH. Therefore, according to the vehicle headlight 1 of the present embodiment, the amount of reflected light reflected by the retroreflective object 81 and directed to the vehicle 100 that is the host vehicle can be reduced, and glare to the driver due to the reflected light can be suppressed. In the example illustrated in FIG. 10, the first region 91a overlaps the entire retroreflective object 81. However, from the viewpoint of suppressing glare to the driver, the first region 91a may overlap at least a part of the retroreflective object 81.

In the ADB light distribution pattern PADB, the light amount of the first region 91b overlapping the human 82 is smaller than the light amount of the first region 91b in the additional light distribution pattern PAH. Therefore, according to the vehicle headlight 1 of the present embodiment, the amount of light irradiated to the human 82 can be reduced, and the glare to the human can be suppressed. In the example illustrated in FIG. 10, the first region 91b overlaps the head of the human 82, and the first region 91b does not overlap most of the body of the human 82. However, from the viewpoint of suppressing the glare on the human 82, it is sufficient that the first region 91b overlaps at least a part of the head of the human 82, and the first region 91b may overlap the entire human 82. The amount of light in the first region 91b is smaller than the amount of light in the first region 91a overlapping the retroreflective object 81. Therefore, according to the vehicle headlight 1 of the present embodiment, as compared with a case where the light amount of the first region 91b is the same as the light amount of the first region 91a, it is possible to suppress deterioration in visibility of the retroreflective object 81 while suppressing the glare on the human 82.

In the ADB light distribution pattern PADB, the light amount of the first region 91c overlapping with the other vehicle 83 is smaller than the light amount of the first region 91c in the additional light distribution pattern PAH. Therefore, according to the vehicle headlight 1 of the present embodiment, the amount of light emitted to the other vehicle 83 can be reduced, and the glare to the driver of the other vehicle 83 can be suppressed. In the example illustrated in FIG. 10, the first region 91c overlaps an upper portion of the license plate of the other vehicle 83. However, from the viewpoint of suppressing the glare to the driver of other vehicle 83, it is sufficient that first region 91c overlaps at least a part of a visual recognition unit for the driver of the other vehicle 83 to visually recognize the outside of the vehicle. For example, the first region 91c may overlap the entire other vehicle 83. Note that the visual recognition unit is, for example, a front window in a case where the other vehicle 83 is an oncoming vehicle, and is, for example, a side mirror, a rear window, an imaging device that images the rear of the vehicle, and the like in a case where the other vehicle 83 is a preceding vehicle, and these generally tend to be arranged above a license plate. The light amount in the first region 91c is smaller than the light amount in the first region 91a overlapping the retroreflective object 81. Therefore, according to the vehicle headlight 1 of the present embodiment, as compared with a case where the light amount of the first region 91c is the same as the light amount of the first region 91a, it is possible to suppress a reduction in visibility of the retroreflective object 81 while suppressing glare to the driver of the other vehicle 83.

In addition, the light amount of the second region 92 in the ADB light distribution pattern PADB is a light amount obtained by increasing the light amount of the second region 92 in the additional light distribution pattern PAH at a predetermined magnification. The light intensity distribution of the second region 92 in the ADB light distribution pattern PADB is a light intensity distribution in which the light intensity distribution of the second region 92 in the additional light distribution pattern PAH is increased at a predetermined magnification. In FIG. 10, the second region 92 is hatched with oblique lines.

In addition, the second region 92 includes at least a part of a region in the smallest rectangular frame 95 surrounding the plurality of first regions 91a, 91b, and 91c, and is all other than the first regions 91a, 91b, and 91c in the rectangular frame 95 in the example illustrated in FIG. 10. In FIG. 10, the rectangular frame 95 is indicated by a broken line. The second region 92 includes the entire region between adjacent first region 91a and first region 91c, and the entire region between adjacent first region 91b and first region 91c. In the plurality of first regions 91a, 91b, and 91c, adjacent sets are a set of the first region 91a and the first region 91c and a set of the first region 91b and the first region 91c. Therefore, the second region 92 includes the entire region between all the sets of adjacent first regions. That is, the control unit CO controls the lamp unit 10 so that the second region 92 becomes such a region.

In addition, the light amount of the third region 93 in the ADB light distribution pattern PADB is a light amount obtained by increasing the light amount of the third region 93 in the additional light distribution pattern PAH at a specific magnification. Note that, in FIG. 10, the third region 93 is hatched with the oblique lines different from the oblique lines of the second region 92. The second region 92 is brighter than the third region 93, and the third region 93 surrounds the second region 92. That is, the control unit CO controls the lamp unit 10 so that the third region 93 becomes such a region. Note that it is sufficient that the second region 92 is brighter than the third region 93, and the manner of increasing the light amount of the third region 93 is not particularly limited. For example, the light amount of the third region 93 may be increased by a predetermined amount, and in this case, the image generation unit 20 increases the brightness of the portion 38 in the intermediate image 35 by the predetermined amount. In addition, the third region 93 in which the light amount is increased may not be provided, and in this case, the image generation unit 20 does not change the brightness of the portion 38 in the intermediate image 35.

In addition, the light amount increased in the second region 92 and the third region 93 is the same as the sum of the amounts of light decreased in the first regions 91a, 91b, and 91c. That is, the control unit CO controls the lamp unit 10 so that the total of the light amounts decreasing in the first regions 91a, 91b, and 91c and the total of the light amounts increasing in the second region 92 and the third region 93 become the same. Therefore, according to the vehicle headlight 1 of the present embodiment, it is possible to suppress an increase in energy consumption as compared with a case where the sum of the amounts of light increased in the second region 92 and the third region 93 is larger than the sum of the amounts of light decreased in the first regions 91a, 91b, and 91c. Note that, from this viewpoint, in a case where the third region 93 is not provided, the control unit CO preferably controls the lamp unit 10 so that the total of the light amounts decreasing in the first regions 91a, 91b, and 91c and the light amount increasing in the second region 92 become the same. The sum of the light amounts increased in the second region 92 and the third region 93 may be different from the sum of the light amounts decreased in the first regions 91a, 91b, and 91c.

Note that, although illustration is omitted, in a case where there is one predetermined object detected by the detection device 120, the first region is one. As described above, in a case where there is one portion on which the reduced light image is superimposed in the intermediate image 35, the image generation unit 20 surrounds the portion on which the reduced light image is superimposed and increases the brightness of the portion in contact with the entire circumference of the portion at a predetermined magnification. Therefore, the second region in a case where there is one predetermined object is a region surrounding the first region. However, the second region only needs to be a region different from the first region in the additional light distribution pattern PAH, and does not need to surround the first region.

As described above, in the vehicle headlight 1 of the present embodiment, when the emission of the high beam is selected by the light switch 110, the light distribution of the emitted light is controlled according to the situation in front of the vehicle 100.

### (Step SP17)

This step is a step in which the control unit CO controls the lamp unit 10 so that the light from the vehicle headlight 1 is not emitted. The light distribution control unit 40 in the control unit CO controls the power supply circuit 50 so as not to emit light from the lamp unit 10. Therefore, the light from the vehicle headlight 1 is not emitted. Then, the control unit CO advances the control flow to Step SP11.

Meanwhile, in the vehicle headlight of JP 2011-031807 A described above, since a region in which the light amount is reduced is formed from the lamp unit, visibility in front of the vehicle tends to decrease, and there is a demand for suppressing such a decrease in visibility in front of the vehicle. In response to this request, for example, it is conceivable to increase the amount of light emitted to a region different from the region where the light amount has been reduced. However, in such light distribution control, when the light amount in some regions increases, the driver of the host vehicle may feel discomfort about the change in the light amount.

Therefore, in the present embodiment, when the predetermined object is not detected, the control unit CO controls the lamp unit 10 so that light having the light distribution pattern PH of a high beam including the additional light distribution pattern PAH as a predetermined light distribution pattern is emitted. When the predetermined object is detected, the control unit CO controls the lamp unit 10 so that the light amount of the first regions 91a, 91b, and 91c overlapping at least a part of the predetermined object in the additional light distribution pattern PAH decreases and the light amount of the second region 92 different from the first regions 91a, 91b, and 91c increases at a predetermined magnification as compared with the case where the predetermined object is not detected.

Therefore, as described above, in the vehicle headlight 1 of the present embodiment, when the other vehicle 83 or the human 82 located in front of the vehicle 100 is detected as an object by the detection device 120, the amount of light emitted to the other vehicle 83 or the human 82 is reduced. Therefore, according to the vehicle headlight 1 of the present embodiment, it is possible to prevent glare from being given to the driver of the other vehicle 83 and the human 82. Furthermore, in a case where the retroreflective object 81 such as a sign is detected as the object by the detection device 120, the amount of light emitted to the retroreflective object 81 is reduced. Therefore, according to the vehicle headlight 1 of the present embodiment, the amount of reflected light reflected by the retroreflective object 81 and directed to the host vehicle is reduced, and glare to the driver of the host vehicle due to the reflected light can be suppressed. In addition, according to the vehicle headlight 1 of the present embodiment, it is possible to suppress a decrease in visibility in front of the vehicle 100 as compared with a case where the second region 92 is not provided. As described above, the light amount of the second region 92 is increased at a predetermined magnification. Therefore, according to the vehicle headlight 1 of the present embodiment, the light amount of the second region 92 is increased while maintaining the relationship of intensity in the light intensity distribution of the second region 92. Therefore, according to the vehicle headlight 1 of the present embodiment, it is possible to suppress the feeling of discomfort as compared with a case where the light amount of the second region 92 is increased without maintaining the relationship of intensity in the light intensity distribution of the second region 92.

In addition, in the vehicle headlight 1 of the present invention, when there are a plurality of predetermined objects to be detected, the control unit CO controls the lamp unit 10 so that the light amounts of the plurality of first regions 91a, 91b, and 91c corresponding to the respective predetermined objects decrease, and the second region 92 includes at least a part of a region in the smallest rectangular frame 95 surrounding the plurality of first regions 91a, 91b, and 91c. The vicinity of the first regions 91a, 91b, and 91c where the light amount is reduced tends to look dark. However, according to the vehicle headlight 1 of the present embodiment, it is possible to prevent the vicinity of the first regions 91a, 91b, and 91c from appearing dark, and it is possible to further suppress deterioration in visibility.

In the vehicle headlight 1 of the present embodiment, the second region 92 includes the entire region between all the sets of adjacent first regions. A region between adjacent first regions tends to look dark. However, according to the vehicle headlight 1 of the present embodiment, it is possible to suppress the dark appearance between the adjacent first regions. From the viewpoint of suppressing the dark appearance between the adjacent first regions, the second region 92 may include at least a part of the region between at least one of the sets of the adjacent first regions. For example, the second region 92 may include at least a part of a region between sets in which the distance between the first regions is equal to or less than a predetermined value among sets of adjacent first regions, and may not include a region between sets in which the distance between the first regions exceeds the predetermined value.

In addition, in the vehicle headlight 1 of the present embodiment, the second region 92 is all other than the first regions 91a, 91b, and 91c in the rectangular frame 95. Therefore, according to the vehicle headlight 1 of the present embodiment, the vicinity of the first region can be prevented from appearing dark as compared with the case where the second region 92 is a part of the rectangular frame 95.

Note that the second region 92 may include a region outside the rectangular frame 95. With such a configuration, it is possible to suppress a decrease in visibility in the vicinity of the first regions 91a, 91b, and 91c and other regions in the additional light distribution pattern PAH.

In addition, in the vehicle headlight 1 of the present invention, the control unit CO controls the lamp unit 10 so that the light amount of the third region 93 different from the first regions 91a, 91b, and 91c and the second region 92 in the additional light distribution pattern PAH increases and the second region 92 becomes brighter than the third region 93 as compared with the case where the predetermined object is not detected. As described above, the second region 92 includes at least a part of the region between the adjacent first regions. Therefore, according to the vehicle headlight 1 of the present invention, as compared with the case where the third region 93 is not provided, it is possible to suppress the dark appearance between the adjacent first regions while suppressing a decrease in visibility in front of the vehicle 100.

In the vehicle headlight 1 of the present invention, the third region 93 surrounds the second region 92. Therefore, according to the vehicle headlight 1 of the present invention, it is possible to suppress discomfort as compared with a case where the third region 93 does not surround the second region 92. The third region 93 is a region different from the first regions 91a, 91b, and 91c and the second region 92 in the additional light distribution pattern PAH.

Further, the control unit CO may control the lamp unit 10 so that the light amount of the second region 92 increases with the lapse of time. With such a configuration, it is possible to suppress feeling of discomfort about the change in the light amount as compared with the case where the light amount of the second region 92 instantaneously increases in response to the detection of the predetermined object. In this case, the control unit CO may control the lamp unit 10 so that the light amount of the second region 92 gradually increases with the lapse of time, or may control the lamp unit 10 so that the light amount of the second region 92 increases stepwise with the lapse of time. For example, the light distribution control unit 40 of the control unit CO controls the power supply circuit 50 based on the image generated by the image generation unit 20 so that the power supplied to the light emitting element 13 that irradiates the second region 92 with light increases stepwise or gradually. The period during which the light amount increases is not limited, but is, for example, one second.

### (Second Embodiment)

Next, a second embodiment as a second aspect and that is not part of the present invention will be described in detail. Note that the same or equivalent components as those of the first embodiment are denoted by the same reference numerals, and redundant description is omitted unless otherwise specified. In the present embodiment, an ADB light distribution pattern corresponding to the predetermined object detected by the detection device 120 is different from the ADB light distribution pattern PADB in the first embodiment. FIG. 11 is a diagram illustrating an example of the ADB light distribution pattern in the present embodiment, similarly to FIG. 10.

As illustrated in FIG. 11, a second region in which the light amount is increased at a predetermined magnification and a third region in which the light amount is increased at a specific magnification are different from the second region 92 and the third region 93 in the first embodiment, as compared with the case where the predetermined object is not detected. In the present embodiment, the second region 92 is a region in the rectangular frame 95, and is the entire region between the adjacent first regions. In the example illustrated in FIG. 11, the entire region between the first region 91a and the first region 91c and the entire region between the first region 91b and the first region 91c are the second regions 92. According to the vehicle headlight 1 of the present embodiment, compared to a case where only a part of the region between the adjacent first regions is the second region, it is possible to prevent the adjacent first regions from appearing dark. In the present embodiment, the image generation unit 20 adjusts the portion 36 for increasing the brightness in the intermediate image 35 at a predetermined magnification so that the ADB light distribution pattern PADB is as described above. Furthermore, in the present embodiment, the second region 92 is the entire region between all of the sets of adjacent first regions, but may be the entire region between at least one of the sets of adjacent first regions. For example, the second region 92 may be the entire region between sets in which the distance between the first regions is equal to or less than a predetermined value among sets of adjacent first regions.

In the present embodiment, the third region 93 is a region that does not surround the second region 92 and overlaps a part of a predetermined object. In the example illustrated in FIG. 11, the third region 93 overlaps the body of the human 82, and the first region 91b overlaps the head of the human 82. That is, in the present embodiment, the control unit CO controls the lamp unit 10 so that the first region 91b overlaps the head of the human 82 and the third region 93 overlaps the body of the human 82. Specifically, the portion 38 in which the image generation unit 20 increases the brightness in the intermediate image 35 is set as a portion corresponding to the third region 93 illustrated in FIG. 11.

According to the vehicle headlight 1 of the present embodiment, since the third region 93 overlaps the human 82, alerting ability of the human 82 can be improved. Note that the predetermined object on which the third region 93 overlaps is not limited to the human 82, and may be the other vehicle 83.

Note that the third region 93 may include all the regions other than the first regions 91a, 91b, and 91c and the second region 92 in the rectangular frame 95. According to such a configuration, since the first region overlaps a part of the predetermined object, the third region 93 can easily overlap the predetermined object even when the position of the third region 93 is not changed according to the predetermined object. Furthermore, according to such a configuration, feeling of discomfort can be suppressed as compared with a case where the third region 93 is a part other than the first regions 91a, 91b, and 91c and the second region 92 in the rectangular frame 95. From such a viewpoint, the third region 93 may include all the regions other than the first regions 91a, 91b, and 91c and the second region 92 in the rectangular frame 95 and surround the second region 92.

### (Third Embodiment)

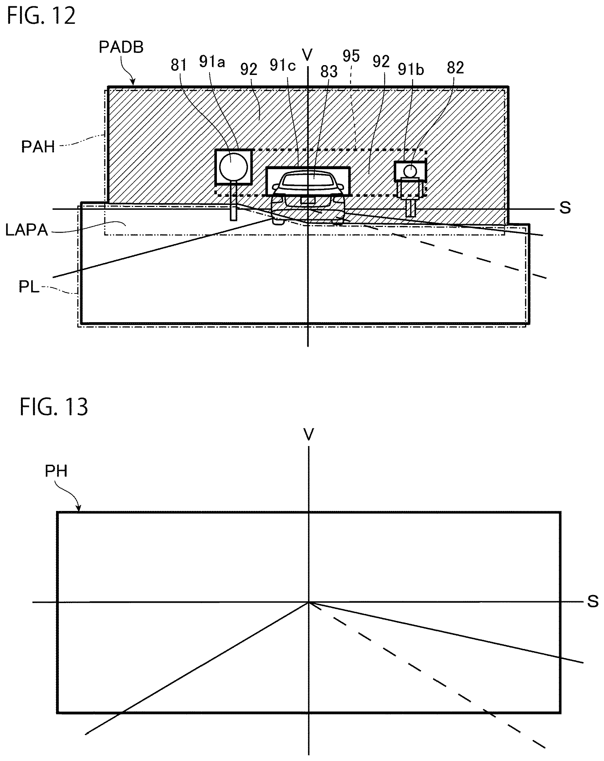

Next, a third embodiment that is not part of the present invention will be described in detail. Note that the same or equivalent components as those of the first embodiment are denoted by the same reference numerals, and redundant description is omitted unless otherwise specified. In the present embodiment, an ADB light distribution pattern corresponding to the predetermined object detected by the detection device 120 is different from the ADB light distribution pattern PADB in the first embodiment. FIG. 12 is a diagram illustrating an example of the ADB light distribution pattern in the present embodiment, similarly to FIG. 10.

As illustrated in FIG. 12, in the present embodiment, the third region 93 is not provided. The second region is different from the second region 92 in the first embodiment. The second region 92 of the present embodiment is all the regions other than the first regions 91a, 91b, and 91c in the additional light distribution pattern PAH, and is a region that does not overlap the light distribution pattern PL of the low beam. That is, the control unit CO controls the lamp unit 10 so that the first regions 91a, 91b, and 91c become a part of the additional light distribution pattern PAH, and the second region 92 is all other than the first regions 91a, 91b, and 91c in the additional light distribution pattern PAH and is a region not overlapping the light distribution pattern PL of the low beam. Specifically, the image generation unit 20 adjusts the portion 36 that increases the brightness in the intermediate image 35 at a predetermined magnification so that the ADB light distribution pattern PADB is as described above. Alternatively, after increasing the overall brightness of the additional light distribution image 32 at a predetermined magnification, the image generation unit 20 synthesizes the additional light distribution image 32, the low beam image 31, and the selected reduced light image to generate the ADB light distribution image. According to the vehicle headlight 1 of the present embodiment, it is possible to suppress feeling of discomfort about the change in the light amount as compared with the case where the second region 92 is a part other than the first regions 91a, 91b, and 91c in the region not overlapping the light distribution pattern PL of the low beam of the additional light distribution pattern PAH.

Although the first aspect of the present invention has been described by taking the first to third embodiments as an example, the first aspect of the present invention is not limited thereto.

For example, in the first to third embodiments, the control unit CO that controls the lamp unit 10 so that the light amount of the second region 92 increases at the predetermined magnification has been described as an example. However, the control unit CO may control the lamp unit 10 so that the light amount of the second region 92 increases by a predetermined amount. According to such a configuration, the light intensity distribution of the second region 92 in the ADB light distribution pattern PADB is a light intensity distribution in which the light intensity distribution of the second region 92 in the additional light distribution pattern PAH is increased by a predetermined amount. Therefore, even with such a configuration, similarly to the first to third embodiments, the light amount of second region 92 is increased while the relationship between the intensity in the light intensity distribution of second region 92 is maintained, and feeling of discomfort can be suppressed as compared with the case where the relationship between the intensity in the light intensity distribution of second region 92 is not maintained.

In the first to third embodiments, the control unit CO that controls the lamp unit 10 to emit the light having the light distribution pattern PH of the high beam including the additional light distribution pattern PAH when the predetermined object is not detected has been described as an example. However, in a case where the predetermined object is not detected, the control unit CO may cause light having a light distribution pattern including a predetermined light distribution pattern to exit from the lamp unit 10, and may cause light having an additional light distribution pattern PAH as a predetermined light distribution pattern to exit from the lamp unit 10. In this case, for example, the lamp portion 5 is configured to include the lamp unit 10 and another lamp unit, and the control unit CO causes another lamp unit to emit a low beam. In this case, the first regions 91a, 91b, and 91c and the second region 92 in the first to third embodiments may include a region overlapping the light distribution pattern PL of the low beam in the additional light distribution pattern PAH. In this case, in the third embodiment, the second region 92 may be a region including a region overlapping the light distribution pattern PL of the low beam, which is all other than the first regions 91a, 91b, and 91c in the additional light distribution pattern PAH. Further, the present invention is not limited to the case where the lamp portion 5 includes the lamp unit 10 and another lamp unit, and the predetermined light distribution pattern is not particularly limited. The predetermined light distribution pattern may be a part of the additional light distribution pattern PAH, or may be at least a part of the light distribution pattern PL of the low beam. In addition, the first regions 91a, 91b, and 91c, the second region 92, and the third region 93 may be regions overlapping a part of the light distribution pattern PL of the low beam. That is, the light amount of the region including a part of the light distribution pattern PL of the low beam may be decreased or increased. In addition, two or more first regions may be provided for one predetermined object, and two or more third regions 93 may be provided.

In the first to third embodiments, the image generation unit 20 that combines images stored in the memory ME using the layer function has been described as an example. However, a method of combining the images of the image generation unit 20 is not particularly limited. For example, in a case where data of pixels constituting an image is a gray value and an opacity as an alpha value, the image generation unit 20 may combine the image by alpha blending. In addition, the method of generating the ADB light distribution image by the image generation unit 20 is not particularly limited. For example, images corresponding to the second region 92 and the third region 93 may be stored in the memory ME, and the image generation unit 20 may generate the ADB light distribution image by combining the images including these images. In addition, the image generation unit 20 may determine a region where the brightness is to be decreased in the low beam image 31 and the additional light distribution image 32 based on the information input from the detection device 120, and generate the ADB light distribution image by darkening the region based on the light reduction weight stored in the memory ME.

In the first to third embodiments, the control unit CO that includes the image generation unit 20 and controls the lamp unit 10 based on the image generated by the image generation unit 20 has been described as an example. However, the control unit CO may not include the image generation unit 20. In this case, for example, information regarding the ADB light distribution pattern corresponding to a predetermined object is stored in the memory ME in advance. Examples of the information include information on the amount of light emitted from each light emitting element 13 so that light emitted from the light source unit 12 is light having an ADB light distribution pattern corresponding to a predetermined object. Then, the control unit CO refers to the information stored in the memory ME based on the information of the predetermined object input from the detection device 120, and controls the lamp unit 10 based on the information.

Furthermore, in the first to third embodiments, the light source unit 12 including the plurality of light emitting elements 13 capable of individually changing the light amount of emitted light has been described as an example. However, the light source unit 12 is not particularly limited. For example, the light source unit 12 may include a digital mirror device (DMD) including a plurality of reflective elements arranged in a matrix and a light emitting unit that irradiates the DMD with light. The DMD can adjust the light amount of light emitted in a predetermined direction from the reflecting surface of each reflective element, and can convert the light emitted in the predetermined direction from each reflective element into light based on the image generated by the image generation unit 20. In this case, it can be understood that it corresponds to a light emitting unit capable of individually changing the light amount of light emitted by the reflecting surface of each reflective element.

In the first to third embodiments, the vehicle 100 including the pair of vehicle headlights 1 including the control unit CO and the memory ME has been described as an example. However, at least one of the control unit CO and the memory ME may be shared by the pair of vehicle headlights 1. Further, the signal output from the detection device 120 may be input to the control unit CO without passing through the ECU101 of the vehicle 100. In addition, the vehicle provided with the vehicle headlight 1, the number of vehicle headlights 1 provided in the vehicle, and the like are not particularly limited.

### (Fourth Embodiment)

Next, a fourth embodiment as a second aspect of the present invention will be described. Note that the same or equivalent components as those of the first embodiment are denoted by the same reference numerals, and redundant description is omitted unless otherwise specified.

In the present embodiment, the images stored in the memory ME are a low beam image and a high beam image. The low beam image is an image in which the light emitted from the light source unit 12 forms a light distribution pattern of a low beam, and the high beam image is an image in which the light emitted from the light source unit 12 forms a light distribution pattern of a high beam. The image generation unit 20 of the present embodiment performs processing on the high beam image based on the information indicated by the signal input from the detection device 120, thereby generating the ADB light distribution image representing the ADB light distribution pattern in which the light amount of a region of a part of the light distribution pattern of the high beam is reduced and the light amount of a region of another part of the light distribution pattern is increased.

Next, the operation of the vehicle headlight 1 of the present embodiment will be described.

The control flow of the present embodiment is the same as the control flow of the first embodiment, and thus will be described with reference to FIG. 6. Since Steps SP11, SP13, SP14, and SP17 of the present embodiment are the same as Steps SP11, SP13, SP14, and SP17 of the first embodiment, the description of Steps SP11, SP13, SP14, and SP17 will be omitted.

### (Step SP12)

In the present embodiment, the image generation unit 20 reads the low beam image stored in the memory ME, and the light distribution control unit 40 controls the power supply circuit 50 based on the information of the low beam image to supply power to each light emitting element 13 of the light source unit 12. By the supply of this power, the light source unit 12 emits light based on a low beam image, and light having a light distribution pattern of a low beam is emitted from the vehicle headlight 1. In this way, the low beam is emitted from the vehicle headlight 1. When the low beam is emitted from the vehicle headlight 1, the control unit CO returns the control flow to Step SP11.

### (Step SP15)

In the present embodiment, the image generation unit 20 reads the high beam image stored in the memory ME, and the light distribution control unit 40 controls the power supply circuit 50 based on the information of the high beam image to supply power to each light emitting element 13 of the light source unit 12. By the supply of this power, the light source unit 12 emits light based on a high beam image, and light having a high beam light distribution pattern is emitted from the vehicle headlight 1. In this way, when another vehicle is not located in front of the vehicle 100, the high beam is emitted from the vehicle headlight 1.

FIG. 13 is a diagram illustrating an example of a light distribution pattern of a high beam in the present embodiment similarly to FIG. 7. In the present embodiment, when emitting a high beam, light is emitted from all the light emitting elements 13, and the outer shape of the light distribution pattern of the high beam is substantially a horizontally long rectangular shape. When the high beam is emitted from the vehicle headlight 1, the control unit CO returns the control flow to Step SP11.

### (Step SP16)

This step is a step in which the control unit CO controls the lamp unit 10 so that the light distribution pattern of the light emitted from the vehicle headlight 1 becomes the ADB light distribution pattern corresponding to the predetermined object detected by the detection device 120. The ADB light distribution pattern in the present embodiment is a light distribution pattern in which light amounts in a first region overlapping at least a part of a predetermined object and a second region along at least a part of an outer edge of the first region are changed in the high beam light distribution pattern PH. The change in the light amount of the first region is a change that decreases as compared with a case where the predetermined object is not located in front of the vehicle 100. The change in the light amount of the second region is a change that increases as compared with a case where the predetermined object is not located in front of the vehicle 100. That is, the control unit CO controls the lamp unit 10 so that the light amount of the first region decreases and the light amount of the second region increases in the high beam light distribution pattern PH as compared with the case where the predetermined object is not located in front of the vehicle 100.

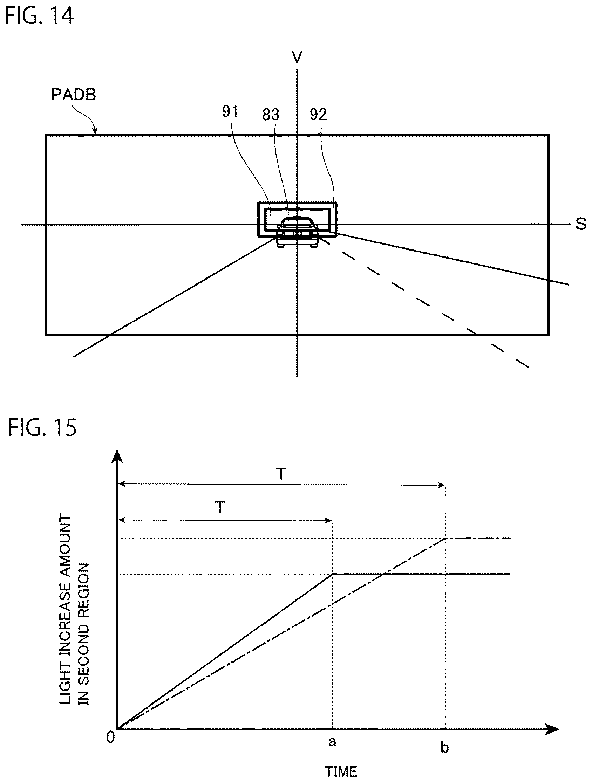

FIG. 14 is a diagram illustrating an example of the ADB light distribution pattern in the present embodiment, similarly to FIG. 7, and is a diagram illustrating the ADB light distribution pattern when another vehicle 83 as a predetermined object is located in front of the vehicle 100. In FIG. 14, the other vehicle 83 is a preceding vehicle. In the ADB light distribution pattern PADB, the light amount of the first region 91 overlapping at least a part of the other vehicle 83 is smaller than the light amount of the first region 91 in the high beam light distribution pattern PH. Therefore, according to the vehicle headlight 1 of the present embodiment, the amount of light emitted to the other vehicle 83 can be reduced, and the glare to the driver of the other vehicle 83 can be suppressed. Note that the first region 91 of the present embodiment is a light shielding region that is not irradiated with light, but is not limited thereto. In the example illustrated in FIG. 14, first region 91 has a rectangular shape overlapping the upper part of the license plate of the other vehicle 83. However, from the viewpoint of suppressing glare to the driver of the other vehicle 83, the first region 91 may overlap at least a part of the visual recognition unit for the driver of the other vehicle 83 to visually recognize the outside of the vehicle. For example, the first region 91 may overlap the entire other vehicle 83, and the shape and size of the first region 91 are not limited.

In addition, the second region 92 in the ADB light distribution pattern PADB is a region along at least a part of the outer edge of the first region 91, and the light amount of the second region 92 is larger than the light amount of the second region 92 in the high beam light distribution pattern PH. Therefore, according to the vehicle headlight 1 of the present embodiment, it is possible to prevent the periphery of the darkened first region 91 from appearing dark, and it is possible to suppress deterioration in visibility in front of the vehicle 100. In the present embodiment, the second region 92 extends along the entire outer edge of the first region 91 and surrounds the entire first region 91, but the second region 92 may extend along at least a part of the outer edge of the first region 91. However, from the viewpoint of preventing the periphery of the first region 91 from appearing dark, it is preferable to surround half or more of the first region 91, and it is more preferable to surround the entire first region 91.

In the present embodiment, the light increase amount, which is the light amount increased in the second region 92, is the same as the light reduction amount, which is the light amount decreased in the first region 91 along the second region 92. In addition, as the light reduction amount of the first region 91 along the second region 92 increases, the light increase amount per unit area of the second region 92 increases. Note that the light increase amount per unit area is constant in the entire second region 92, but may not be constant. The width of the second region 92 in the direction perpendicular to the direction in which the second region 92 is along the outer edge of the first region 91 is substantially constant in the direction along the outer edge. In the following description, the width of the second region 92 refers to the above-described width.

Note that, although illustration is omitted, in the present embodiment, in a case where there are a plurality of predetermined objects detected by the detection device 120, the first region 91 is provided for each of the predetermined objects, and the second region 92 is individually provided for each of the first regions 91.

In the light control of the ADB light distribution pattern, in the present embodiment, the image generation unit 20 first reads the high beam image stored in the memory ME. Next, the image generation unit 20 processes the high beam image based on the information regarding the predetermined object input from the detection device 120 to generate an ADB light distribution image representing the ADB light distribution pattern PADB. The processing of the image generation unit 20 is processing in which a region corresponding to the first region 91 in the high beam image becomes dark and a region corresponding to the second region 92 becomes bright. The image generation unit 20 processes the high beam image in this manner to generate the ADB light distribution image. Next, the light distribution control unit 40 controls the power supply circuit 50 based on the information of the generated ADB light distribution image, and causes the light source unit 12 to emit light based on the ADB light distribution image. As a result, the light of the ADB light distribution pattern PADB is emitted from the vehicle headlight 1. Then, the control unit CO returns the control flow to Step SP11.

As described above, in the vehicle headlight 1 of the present embodiment, when the emission of the high beam is selected by the light switch 110, the light distribution of the emitted light is controlled according to the situation in front of the vehicle 100.

Next, a change in the light distribution pattern when emission of a high beam is selected by the light switch 110 will be described. First, the change in the light distribution pattern from the state where the predetermined object is not located in front of the vehicle 100 to the state where the predetermined object is located in front of the vehicle 100, that is, the change from the high beam light distribution pattern PH to the ADB light distribution pattern PADB will be described. Hereinafter, a case where the light distribution pattern changes from the high beam light distribution pattern PH illustrated in FIG. 13 to the ADB light distribution pattern PADB illustrated in FIG. 14 will be described as an example.

In this case, the control unit CO controls the lamp unit 10 so that the light amount of the first region 91 overlapping at least a part of the other vehicle 83 in the light distribution pattern PH of the high beam decreases, and the light amount of the second region 92 along at least a part of the outer edge of the first region 91 increases with the lapse of time to become a predetermined amount. This predetermined amount is the light amount of the second region 92 in the ADB light distribution pattern PADB, and when the light amount of the second region 92 becomes a predetermined amount, the light distribution pattern PH of the high beam changes to the ADB light distribution pattern PADB.

In the present embodiment, the light amount increases with lapse of time in the entire second region 92. Therefore, the entire second region 92 gradually becomes brighter with lapse of time.

FIG. 15 is a graph illustrating an example of a temporal change in the light increase amount in the second region 92, and is a graph illustrating an example of a temporal change in the light increase amount in the second region 92 based on the time at which the increase in the light amount is started. A change indicated by a solid line in FIG. 15 is a temporal change of the light increase amount in the second region 92 illustrated in FIG. 14, the light amount of the second region 92 increases with the lapse of time, and the light amount of the second region 92 becomes a predetermined amount at the time a. In the present embodiment, as illustrated in FIG. 15, the light amount that increases per unit time in the second region 92 is constant.

In the present embodiment, a period T until the light amount of the second region 92 reaches the predetermined amount is longer as the area of the second region 92 is larger. Therefore, for example, when the area of the second region 92 is larger than the area of the second region 92 illustrated in FIG. 14, the temporal change of the light increase of the second region 92 is as indicated by a one-dot chain line in FIG. 15, and the light amount of the second region 92 becomes a predetermined amount at a time b later than the time a. In the present embodiment, as the area of the second region 92 increases, the light amount that increases per unit time decreases, so that the period T until the light amount in the second region 92 reaches a predetermined amount is lengthened. However, it is sufficient that the period T until the light amount of the second region 92 becomes the predetermined amount becomes longer as the area of the second region 92 increases, and for example, the light amount increasing per unit time may be constant regardless of the area of the second region 92. In this way, the control load of the control unit CO can be reduced.

In this way, in the control of changing the light distribution pattern PH of the high beam to the ADB light distribution pattern PADB, in the present embodiment, the image generation unit 20 generates a plurality of images indicating the middle of the change based on the information regarding the other vehicle 83 input from the detection device 120. Next, the light distribution control unit 40 controls the power supply circuit 50 based on the information of these images to emit light from the light source unit 12.

Note that, although illustration is omitted, in the present embodiment, in a case where a state in which the other vehicle 83 as a predetermined object is located in front of the vehicle 100 is changed to a state in which another predetermined object in addition to the other vehicle 83 is located in front of the vehicle 100, the control unit CO controls the lamp unit 10 as follows. In the ADB light distribution pattern PADB in which the first region 91 and the second region 92 with respect to the other vehicle 83 are provided, the control unit CO controls the lamp unit 10 so that the light amount of another first region 91 overlapping at least a part of another predetermined object decreases, and the light amount of another second region 92 along at least a part of the outer edge of the other first region 91 increases with the lapse of time to become a predetermined amount.

Next, the change in the light distribution pattern in a case where a predetermined object located in front of the vehicle 100 is not located in front of the vehicle 100 will be described. Hereinafter, a case where the other vehicle 83 illustrated in FIG. 14 is no longer positioned in front of the vehicle 100 and the light distribution pattern changes from the ADB light distribution pattern PADB illustrated in FIG. 14 to the high beam light distribution pattern PH illustrated in FIG. 13 will be described as an example.

In this case, the control unit CO controls the lamp unit 10 so that the light amount of the first region 91 increases with the lapse of time and returns to the light amount of the first region 91 in the light distribution pattern PH of the high beam, and the light amount of the second region 92 decreases with the lapse of time and returns to the light amount of the second region 92 in the light distribution pattern PH of the high beam. Therefore, according to the vehicle headlight 1 of the present embodiment, it is possible to suppress the feeling of discomfort of the driver as compared with the case where the light amount of each of the first region 91 and the second region 92 instantaneously returns to the light amount in the high beam light distribution pattern PH.

Note that the light amount of each of the first region 91 and the second region 92 only needs to return to the light amount in the high beam light distribution pattern PH, and for example, each light amount may also instantaneously return to the light amount in the high beam light distribution pattern PH.

In the present embodiment, the timing at which the light amount of the first region 91 returns to the light amount of the first region 91 in the high beam light distribution pattern PH is the same as the timing at which the light amount of the second region 92 returns to the light amount of the second region 92 in the light distribution pattern PH of the high beam. That is, the control unit CO controls the lamp unit 10 in such a manner. However, these timings may be different from each other.

In addition, in the present embodiment, the period until the light amount of each of the first region 91 and the second region 92 returns to the light amount in the light distribution pattern PH of the high beam is longer as the total area of the first region 91 and the second region 92 is larger. However, this period may be constant.

Note that, although illustration is omitted, in the present embodiment, in a case where a state in which a plurality of predetermined objects are located in front of the vehicle 100 is changed to a state in which a specific object among the plurality of predetermined objects is not located in front of the vehicle 100, the control unit CO controls the lamp unit 10 as follows. The control unit CO controls the lamp unit 10 so that the light amount of the first region 91 with respect to the specific object increases with the lapse of time and returns to the light amount of the first region 91 in the light distribution pattern PH of the high beam, and the light amount of the second region 92 along the outer edge of the first region 91 with respect to the specific object decreases with the lapse of time and returns to the light amount of the second region 92 in the light distribution pattern PH of the high beam.

In this way, in the vehicle headlight 1 of the present embodiment, when the emission of the high beam is selected by the light switch 110, the light distribution pattern of the emitted light changes according to the predetermined object located in front of the vehicle 100.

By the way, in a case where the region in which the light amount is reduced is formed as in the vehicle headlight of JP 2011-031807 A described above, the driver of the host vehicle tends to look dark around the region together with the region, and there is a demand for suppressing such deterioration in visibility in front of the vehicle. In response to this request, for example, it is conceivable to increase the amount of light emitted to the periphery of the region in which the light amount has been reduced. However, in such light distribution control, when the light amount in some regions increases, the driver of the host vehicle may feel discomfort about the increase.

Therefore, the vehicle headlight 1 of the present embodiment includes the lamp unit 10 and the control unit CO that receives a signal from the detection device 120 that detects the other vehicle 83 as the predetermined object located in front of the vehicle 100 and controls the lamp unit 10. The control unit CO controls the lamp unit 10 so that the light amount of the first region 91 overlapping at least a part of the other vehicle 83 decreases in the light distribution pattern PH of the high beam, and the light amount of the second region 92 along at least a part of the outer edge of the first region 91 increases with the lapse of time to become a predetermined amount. Therefore, in the vehicle headlight 1 of the present embodiment, as described above, when the state in which the predetermined object is not located in front of the vehicle is changed to the state in which the predetermined object is located in front of the vehicle, the first region 91 in which the light amount is reduced and which overlaps at least a part of the other vehicle 83 can be provided. In addition, when the first region 91 is provided, the light amount of the second region along at least a part of the outer edge of the first region 91 increases with the lapse of time to become the predetermined amount. Therefore, according to the vehicle headlight 1 of the present embodiment, it is possible to prevent the periphery of the darkened first region 91 from appearing dark while reducing the amount of light emitted to the other vehicle 83, and it is possible to suppress a decrease in visibility in front of the vehicle 100. In addition, according to the vehicle headlight 1 of the present embodiment, it is possible to suppress the feeling of discomfort of the driver as compared with the case where the light amount of the second region 92 instantaneously reaches the predetermined amount. Therefore, according to the vehicle headlight 1 of the present embodiment, when the light amount of the region overlapping at least a part of the predetermined object is reduced, it is possible to suppress deterioration in visibility while suppressing the feeling of discomfort of the driver.

In addition, in the vehicle headlight 1 of the present embodiment, the control unit CO controls the lamp unit 10 so that the light amount that increases per unit time in the second region 92 becomes constant. Therefore, according to the vehicle headlight 1 of the present embodiment, the control load of the control unit CO can be reduced.

In addition, in the vehicle headlight 1 of the present embodiment, the control unit CO controls the lamp unit 10 so that the period T until the light amount of the second region 92 becomes a predetermined amount becomes longer as the area of the second region 92 is larger. As the area of the region where the light amount changes increases, the driver tends to feel discomfort about the change in the light amount. Therefore, according to the vehicle headlight 1 of the present embodiment, it is possible to suppress the feeling of discomfort of the driver about the increase in the light amount of the second region 92.

In addition, in the vehicle headlight 1 of the present embodiment, the control unit CO controls the lamp unit 10 so that the light increase amount per unit area of the second region 92 increases as the light reduction amount of the first region 91 increases. Therefore, according to the vehicle headlight 1 of the present embodiment, it is possible to prevent the second region 92 from becoming too large, and it is possible to suppress the feeling of discomfort of the driver.

In addition, in the vehicle headlight 1 of the present embodiment, the control unit CO controls the lamp unit 10 so that the light reduction amount in the first region 91 and the light increase amount in the second region 92 become the same. Therefore, according to the vehicle headlight 1 of the present embodiment, it is possible to suppress an increase in energy consumption as compared with a case where the light increase amount in the second region 92 is larger than the light reduction amount in the first region 91. Note that the light reduction amount of the first region 91 and the light increase amount of the second region 92 may be different from each other.

In the present embodiment, the example in which the first region 91 overlaps at least a part of the other vehicle 83 as a predetermined object has been described. However, for example, in a case where the first region overlaps at least a part of the retroreflective object as the predetermined object, the amount of light emitted to the retroreflective object is reduced. Therefore, the amount of reflected light reflected by the retroreflective object and directed to the host vehicle is reduced, and glare to the driver of the host vehicle due to the reflected light can be suppressed. In addition, in a case where the first region overlaps at least a part of a human as a predetermined object, glare to the human can be suppressed by reducing the amount of light applied to the human. In this case, the first region preferably overlaps only the human head.

Although the second aspect of the present invention has been described by taking the fourth embodiment as an example, the present invention is not limited thereto.

For example, in the fourth embodiment, the example in which the first region 91 and the second region 92 are formed in the light distribution pattern PH of the high beam has been described. However, the light distribution pattern in which the first region 91 and the second region 92 are formed is not limited, and for example, these regions may be formed in an additional light distribution pattern that is added to a light distribution pattern of a low beam to form a light distribution pattern of a high beam. In this case, for example, the low beam is emitted from a lamp unit different from the lamp unit 10, and the lamp unit 10 emits light forming the additional light distribution pattern.

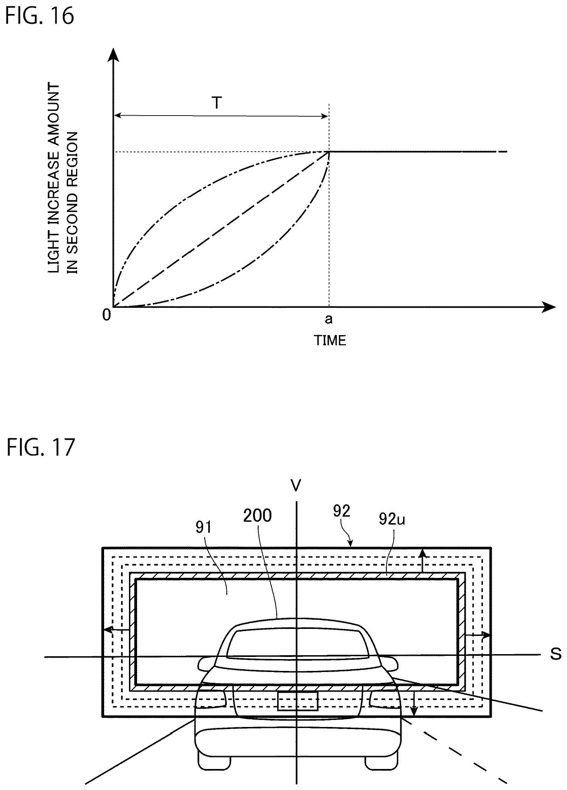

In addition, in the fourth embodiment, the control unit CO that controls the lamp unit 10 so that the light amount increasing per unit time in the second region 92 becomes constant when the light amount of the second region 92 is set to the predetermined amount has been described as an example. However, the light amount that increases per unit time in the second region 92 may not be constant. For example, as indicated by one-dot chain line in FIG. 16, the control unit CO may control the lamp unit 10 so that the light amount that increases per unit time in the second region 92 increases with the lapse of time. Furthermore, as indicated by a two-dot chain line in FIG. 16, the lamp unit 10 may be controlled so that the light amount that increases per unit time in the second region 92 decreases with the lapse of time. FIG. 16 is a graph illustrating a temporal change in the light increase amount of the second region 92 in the modification similarly to FIG. 15, and FIG. 16 illustrates a temporal change in the light increase amount of the second region 92 in the fourth embodiment by a broken line.

In the fourth embodiment, the control unit CO that controls the lamp unit 10 so that the light increase amount per unit area of the second region 92 increases as the light reduction amount in the first region 91 increases has been described as an example. However, the control of the lamp unit 10 by the control unit CO is not limited.

For example, the control unit CO may control the lamp unit 10 so that the width of the second region 92 of the second region 92 is increased in a direction perpendicular to the direction along the outer edge of the first region 91 as the light reduction amount in the first region 91 increases. According to such a configuration, it is possible to prevent the second region 92 from becoming too bright, and it is possible to suppress the feeling of discomfort of the driver.

In addition, the control unit CO may control the lamp unit 10 so that a light increase rate of the second region 92 increases as the light reduction amount of the first region 91 increases. The light increase rate is a rate (%) of the light increase amount based on the light amount when the predetermined object is not located in front of the vehicle 100. For example, when the light amount before the light increase is 100 and the light amount after the light increase is 120, the light increase rate is 20%. According to the above configuration, it is possible to prevent the second region 92 from becoming too large, and it is possible to suppress the feeling of discomfort of the driver. Note that the light increase rate may or may not be constant in the entire second region 92.

In addition, the control unit CO may control the lamp unit 10 so that the light increase amount per unit area of the second region 92 increases as the area of the first region 91 increases. The periphery of the first region 91 tends to appear darker as the area of the first region 91 increases. Therefore, by adopting the above configuration, it is possible to more appropriately prevent the first region 91 from appearing dark.

Further, the control unit CO may control the lamp unit 10 so that the width of the second region 92 of the second region 92 in the direction perpendicular to the direction along the outer edge of the first region 91 increases as the area of the first region 91 increases. A region that looks dark around the first region 91 tends to be wider as the area of the first region 91 increases. Therefore, by adopting the above configuration, it is possible to more appropriately prevent the first region 91 from appearing dark.

In addition, in the fourth embodiment, the control unit CO that controls the lamp unit 10 so that the light amount increases with the lapse of time in the entire second region 92 when the light amount of the second region 92 is set to the predetermined amount has been described as an example. However, as illustrated in FIG. 17, the control unit CO may control the lamp unit 10 so that a region 92u where the light amount increases in the second region 92 spreads from the first region 91 side toward the side opposite to the first region 91 with the lapse of time. FIG. 17 is a diagram for explaining an example of a state in which the light amount of the second region 92 increases in the modification. Note that, in FIG. 17, for easy understanding, the region 92u is hatched with oblique lines, and an arrow indicating a direction in which the region 92u spreads is described.

Although not illustrated, the control unit CO may control the lamp unit 10 so that the region 92u in which the light amount increases in the second region 92 spreads from the opposite side of the first region 91 toward the first region 91 with lapses of time.

In the fourth embodiment, the control unit CO that controls the lamp unit 10 so that the first region 91 and the second region 92 are provided when the predetermined object is located in front of the vehicle 100 has been described as an example. However, the control unit CO may control the lamp unit 10 so that the light amount of the first region 91 overlapping at least a part of the predetermined object located in front of the vehicle 100 decreases, and the light amount of the second region 92 along at least a part of the outer edge of the first region 91 increases with the lapse of time to become a predetermined amount. For example, the control unit CO may control the lamp unit 10 to provide the first region 91 and the second region 92 in a case where the distance between a predetermined object located in front of the vehicle 100 and the vehicle 100 is a predetermined distance or less. In this case, for example, the detection unit 122 in the detection device 120 can detect a distance between a predetermined object and the vehicle 100, and is configured to output a signal indicating information including the distance. Then, in Step SP14 in the fourth embodiment, when a signal indicating that the predetermined object does not exist is input from the detection device 120, or when a signal indicating that the distance between the predetermined object and the vehicle 100 exceeds the predetermined distance is input, the control unit CO advances the control flow to Step SP15. In addition, in a case where a signal indicating that the distance between the predetermined object and the vehicle 100 is equal to or less than the predetermined distance is input from the detection device 120, the control unit CO proceeds to Step SP16. In this manner, the first region 91 and the second region 92 can be provided in a case where the distance between the predetermined object located in front of the vehicle 100 and the vehicle 100 is equal to or less than the predetermined distance.

In addition, in the fourth embodiment, the light source unit 12 including the plurality of light emitting elements 13 capable of individually changing the light amount of emitted light has been described as an example. However, the light source unit 12 is not limited. For example, the light source unit 12 may include a DMD including a plurality of reflective elements arranged in a matrix and a light emitting unit that irradiates the DMD with light. The DMD can adjust the light amount of light emitted in a predetermined direction from the reflecting surface of each reflective element, and can convert the light emitted in the predetermined direction from each reflective element into light based on the image generated by the image generation unit 20. In this case, it can be understood that it corresponds to a light emitting unit capable of individually changing the light amount of light emitted by the reflecting surface of each reflective element.

In the fourth embodiment, the control unit CO that includes the image generation unit 20 and controls the lamp unit 10 based on the ADB image generated by the image generation unit 20 has been described as an example. However, the control unit CO may not include the image generation unit 20. In this case, for example, information regarding the ADB light distribution pattern according to a predetermined object may be stored in the memory ME in advance, and the control unit CO may control the lamp unit 10 based on the information.

In the fourth embodiment, the vehicle 100 including the pair of vehicle headlights 1 including the control unit CO and the memory ME has been described as an example. However, at least one of the control unit CO and the memory ME may be shared by the pair of vehicle headlights 1. Further, the signal output from the detection device 120 may be input to the control unit CO without passing through the ECU101 of the vehicle 100. In addition, the vehicle provided with the vehicle headlight 1, the number of vehicle headlights 1 provided in the vehicle, and the like are not particularly limited.

According to a first aspect of the present invention, there is provided a vehicle headlight capable of controlling light distribution while suppressing discomfort, and according to a second aspect of the present invention, there is provided a vehicle headlight capable of suppressing deterioration in visibility while suppressing the discomfort of the driver when reducing the light amount in a region overlapping at least a part of a predetermined object, and the vehicle headlight can be used in the field of vehicle headlights such as automobiles.

## Claims

1. A vehicle headlight (1) comprising:
a lamp unit (10) capable of changing a light distribution pattern of emitted light; and
a control unit (CO) that controls the lamp unit (10) based on information input from a detection device (120) that detects a predetermined object located in front of a vehicle (100),
wherein the control unit (CO)
controls the lamp unit (10) to emit light having a light distribution pattern including a predetermined light distribution pattern in a case where the predetermined object is not detected, and
in a case where the predetermined object is detected, controls the lamp unit (10) so that a light amount of a first region (91a, 91b, 91c) overlapping at least a part of the predetermined object in the predetermined light distribution pattern decreases and a light amount of a second region (92) different from the first region (91a, 91b, 91c) increases at a predetermined magnification or by a predetermined amount as compared with the case where the predetermined object is not detected,
wherein in a case where a plurality of the predetermined objects to be detected are present, the control unit (CO) controls the lamp unit (10) so that light amounts of a plurality of the first regions (91a, 91b, 91c) corresponding to the respective predetermined objects decrease and the second region (92) includes at least a part of a region in a minimum rectangular frame (95) surrounding the plurality of first regions (91a, 91b, 91c),
wherein the second region (92) includes at least a part of a region between the adjacent first regions (91a, 91b, 91c),
**characterized in that** the control unit (CO) controls the lamp unit (10) so that a light amount of a third region (93) different from the first region (91a, 91b, 91c) and the second region (92) in the predetermined light distribution pattern increases and the second region (92) becomes brighter than the third region (93) as compared with the case where the predetermined object is not detected, and
**in that** the third region (93) surrounds the second region (92).

2. The vehicle headlight (1) according to claim 1,
wherein the control unit (CO) controls the lamp unit (10) so that the light amount decreasing in the first region (91a, 91b, 91c) and the light amount increasing in the second region (92) become the same.

3. The vehicle headlight according to claim 1 or 2,
wherein the control unit (CO) controls the lamp unit (10) so that the light amount in the second region (92) increases with lapse of time.

4. The vehicle headlight according to any of the previous claims,
wherein the second region (92) includes at least a part of a region between all of the sets of adjacent first regions (91a, 91b, 91c) when three or more of the predetermined objects are detected.

5. The vehicle headlight according to any of the previous claims,
wherein the second region (92) includes all other than the first regions (91a, 91b, 91c) in the rectangular frame (95).

6. The vehicle headlight according to any of the previous claims,
wherein the second region (92) includes a region outside the rectangular frame (95).

## Patentansprüche

1. Scheinwerfer für Fahrzeuge (1), umfassend:
eine Lampeneinheit (10), die in der Lage ist, ein Lichtverteilungsmuster von ausgestrahltem Licht zu ändern; und
eine Steuereinheit (CO), die die Lampeneinheit (10) auf der Grundlage von Informationen steuert, die von einer Erfassungsvorrichtung (120) eingegeben werden, die ein vorbestimmtes Objekt erfasst, das vor einem Fahrzeug (100) gelegen ist,
wobei die Steuereinheit (CO)
die Lampeneinheit (10) zum Ausstrahlen von Licht steuert, das ein Lichtverteilungsmuster aufweist, einschließlich eines vorbestimmten Lichtverteilungsmusters, in einem Fall, bei dem das vorbestimmte Objekt nicht erfasst wird, und
in einem Fall, bei dem das vorbestimmte Objekt erfasst wird, die Lampeneinheit (10) derart steuert, dass eine Lichtmenge eines ersten Bereichs (91a, 91b, 91c), der zumindest einen Teil des vorbestimmten Objekts im vorbestimmten Lichtverteilungsmuster überlappt, abnimmt und eine Lichtmenge eines zweiten Bereichs (92), der sich von dem ersten Bereich (91a, 91b, 91c) unterscheidet, mit einer vorbestimmten Vergrößerung oder um eine vorbestimmte Menge im Vergleich zu dem Fall, bei dem das vorbestimmte Objekt nicht erfasst wird, zunimmt,
wobei in einem Fall, bei dem eine Vielzahl der vorbestimmten zu erfassenden Objekte vorhanden sind, die Steuereinheit (CO) die Lampeneinheit (10) derart steuert, dass Lichtmengen einer Vielzahl von ersten Bereichen (91a, 91b, 91c), die den jeweiligen vorbestimmten Objekten entsprechen, abnehmen und der zweite Bereich (92) mindestens einen Teil eines Bereichs in einem minimalen rechteckigen Rahmen (95) einschließt, der die Vielzahl von ersten Bereichen (91a, 91b, 91c) umgibt,
wobei der zweite Bereich (92) mindestens einen Teil eines Bereichs zwischen den benachbarten ersten Regionen (91a, 91b, 91c) einschließt,
**dadurch gekennzeichnet, dass** die Steuereinheit (CO) die Lampeneinheit (10) derart steuert, dass eine Lichtmenge eines dritten Bereichs (93), der sich von dem ersten Bereich (91a, 91b, 91c) und dem zweiten Bereich (92) unterscheidet, im vorbestimmten Lichtverteilungsmuster zunimmt und der zweite Bereich (92) verglichen mit dem Fall, bei dem das vorbestimmte Objekt nicht erfasst wird, heller als der dritte Bereich (93) wird, und
dadurch, dass der dritte Bereich (93) den zweiten Bereich (92) umgibt.

2. Scheinwerfer für Fahrzeuge (1) nach Anspruch 1,
wobei die Steuereinheit (CO) die Lampeneinheit (10) derart steuert, dass die im ersten Bereich (91a, 91b, 91c) abnehmende Lichtmenge und die im zweiten Bereich (92) zunehmende Lichtmenge gleich werden.

3. Scheinwerfer für Fahrzeuge nach Anspruch 1 oder 2,
wobei die Steuereinheit (CO) die Lampeneinheit (10) derart steuert, dass die Lichtmenge im zweiten Bereich (92) im Laufe der Zeit zunimmt.

4. Scheinwerfer für Fahrzeuge nach einem der vorstehenden Ansprüche,
wobei der zweite Bereich (92) mindestens einen Teil eines Bereichs zwischen allen der Sätze von benachbarten ersten Regionen (91a, 91b, 91c) einschließt, wenn drei oder mehr der vorbestimmten Objekte erfasst werden.

5. Scheinwerfer für Fahrzeuge nach einem der vorstehenden Ansprüche,
wobei der zweite Bereich (92) alle anderen außer den ersten Bereichen (91a, 91b, 91c) im rechteckigen Rahmen (95) einschließt.

6. Scheinwerfer für Fahrzeuge nach einem der vorstehenden Ansprüche,
wobei der zweite Bereich (92) einen Bereich außerhalb des rechteckigen Rahmens (95) einschließt.

## Revendications

1. Phare de véhicule (1) comprenant :
une unité de lampe (10) capable de modifier un motif de distribution de lumière d'une lumière émise ; et
une unité de commande (CO) qui commande l'unité de lampe (10) sur la base d'informations entrées à partir d'un dispositif de détection (120) qui détecte un objet prédéterminé situé à l'avant d'un véhicule (100),
dans lequel l'unité de commande (CO)
commande l'unité de lampe (10) pour émettre une lumière présentant un motif de distribution de lumière incluant un motif de distribution de lumière prédéterminé dans un cas où l'objet prédéterminé n'est pas détecté, et
dans un cas où l'objet prédéterminé est détecté, commande l'unité de lampe (10) de sorte qu'une quantité de lumière d'une première région (91a, 91b, 91c) chevauchant au moins une partie de l'objet prédéterminé dans le motif de distribution de lumière prédéterminé diminue et qu'une quantité de lumière d'une deuxième région (92) différente de la première région (91a, 91b, 91c) augmente à un grossissement prédéterminé ou d'une quantité prédéterminée par comparaison avec le cas où l'objet prédéterminé n'est pas détecté,
dans lequel dans un cas où une pluralité des objets prédéterminés à détecter sont présents, l'unité de commande (CO) commande l'unité de lampe (10) de sorte que des quantités de lumière d'une pluralité des premières régions (91a, 91b, 91c) correspondant aux objets prédéterminés respectifs diminuent et que la deuxième région (92) inclue au moins une partie d'une région dans un cadre rectangulaire (95) minimal entourant la pluralité de premières régions (91a, 91b, 91c),
dans lequel la deuxième région (92) inclut au moins une partie d'une région entre les premières régions adjacentes (91a, 91b, 91c),
**caractérisé en ce que** l'unité de commande (CO) commande l'unité de lampe (10) de sorte qu'une quantité de lumière d'une troisième région (93) différente de la première région (91a, 91b, 91c) et de la deuxième région (92) dans le motif de distribution de lumière prédéterminé augmente et que la deuxième région (92) devienne plus brillante que la troisième région (93) par comparaison avec le cas où l'objet prédéterminé n'est pas détecté, et
**en ce que** la troisième région (93) entoure la deuxième région (92).

2. Phare de véhicule (1) selon la revendication 1,
dans lequel l'unité de commande (CO) commande l'unité de lampe (10) de sorte que la quantité de lumière diminuant dans la première région (91a, 91b, 91c) et que la quantité de lumière augmentant dans la deuxième région (92) deviennent identiques.

3. Phare de véhicule selon la revendication 1 ou 2,
dans lequel l'unité de commande (CO) commande l'unité de lampe (10) de sorte que la quantité de lumière dans la deuxième région (92) augmente avec un laps de temps.

4. Phare de véhicule selon l'une quelconque des revendications précédentes,
dans lequel la deuxième région (92) inclut au moins une partie d'une région entre tous les ensembles de premières régions adjacentes (91a, 91b, 91c) lorsque trois des objets prédéterminés ou plus sont détectés.

5. Phare de véhicule selon l'une quelconque des revendications précédentes,
dans lequel la deuxième région (92) inclut toutes les régions autres que les premières régions (91a, 91b, 91c) dans le cadre rectangulaire (95).

6. Phare de véhicule selon l'une quelconque des revendications précédentes,
dans lequel la deuxième région (92) inclut une région extérieure au cadre rectangulaire (95).
